# EUROPEAN PATENT APPLICATION

(11) **EP 4 811 890 A1**
(43) Date of publication of application: **23.09.2026**
(21) Application number: 24902530.5
(22) Date of filing: 22.11.2024
(51) Int. Cl.: H04W 56/00

(54) **INFORMATION TRANSMISSION METHOD AND COMMUNICATION APPARATUS**

(30) Priority: 14.12.2023 CN 202311730584
(71) Applicant: Huawei Technologies Co., Ltd., Shenzhen, Guangdong 518129 (CN)
(72) Inventor: JIAO, Minghan, Shenzhen, Guangdong 518129 (CN); LI, Ruijie, Shenzhen, Guangdong 518129 (CN)
(74) Representative: Grünecker Patent- und Rechtsanwälte PartG mbB
(86) International application number: PCT/CN2024/133874
(87) International publication number: WO 2025/124108

(57) **Abstract**

An information transmission method and a communication apparatus are provided. A network device may notify a terminal device of a transmission configuration of a synchronization signal (for example, an SSB) by using first information. The transmission configuration of the SSB may be a changed transmission configuration of the SSB or an initial transmission configuration of the SSB. A terminal device in an RRC connected state, a terminal device in an RRC inactive state, or a terminal device in an RRC idle state can all receive the first information, to obtain a transmission configuration status of the SSB based on the first information. In this way, terminal devices in various states can correctly receive the SSB, thereby ensuring normal running of communication. In addition, the transmission configuration of the synchronization signal is notified merely through a first message, which requires fewer communication resources and a shorter procedure time, thereby reducing overhead of communication resources and notification delay.

## Description

This application claims priority to Chinese Patent Application No. 202311730584.3, filed with the China National Intellectual Property Administration on December 14, 2023 and entitled "INFORMATION TRANSMISSION METHOD AND COMMUNICATION APPARATUS", which is incorporated herein by reference in its entirety.

### TECHNICAL FIELD

This application relates to the field of communication technologies, and more specifically, to an information transmission method and a communication apparatus.

### BACKGROUND

A synchronization signal block (synchronization signal block, SSB) may also be referred to as a synchronization signal (synchronization signal, SS) or a physical broadcast channel block (physical broadcast channel block, PBCH block). In current communication networks, a terminal device searches for a cell mainly by searching for an SSB, and successfully receiving a synchronization signal block is a prerequisite for accessing the corresponding cell. Therefore, it is essential for the terminal device to correctly receive the SSB.

Currently, when the transmission configuration of the SSB changes, for example, when the beam used to send the SSB changes, or when the SSB sending periodicity changes, the base station needs to notify the terminal device of these changes in a timely manner. This enables the terminal device to correctly receive the SSB based on the changed transmission configuration of the SSB. However, existing procedures for notifying the terminal device of SSB transmission configuration changes are time-consuming and require significant communication resources, resulting in high overhead of the communication resources and a large notification delay. Consequently, the terminal device may not obtain the changed SSB transmission configuration in time, potentially disrupting normal communication and affecting communication efficiency.

### SUMMARY

This application provides an information transmission method and a communication apparatus, enabling terminal devices in various states to correctly receive the transmission configuration of a synchronization signal (for example, an SSB), thereby ensuring normal running of communication. In addition, the transmission configuration of the synchronization signal is notified merely through a first message, which requires fewer communication resources and a shorter procedure time, thereby reducing overhead of communication resources and notification delay.

According to a first aspect, an information transmission method is provided. The method may be performed by a terminal device, or may be performed by a chip, a chip system, a processor, or the like that supports the terminal device in implementing the method. The method includes: receiving first information, where the first information indicates a transmission configuration of a first synchronization signal, and the transmission configuration of the first synchronization signal includes at least one of the following: a sending periodicity of the first synchronization signal, a sending offset of the first synchronization signal, or an actual transmission status of the first synchronization signal on a transmission occasion corresponding to the first synchronization signal; and determining the transmission configuration of the first synchronization signal based on the first information.

According to the information transmission method provided in the first aspect, the transmission configuration of the first synchronization signal may be obtained based on the first information, and terminal devices in various states may all receive the first information, to obtain the transmission configuration of the synchronization signal based on the first information. In this way, the terminal devices in various states can correctly receive the synchronization signal, thereby ensuring normal running of communication. In addition, the transmission configuration of the synchronization signal is notified merely through a first message, which requires fewer communication resources and a shorter procedure time, thereby reducing overhead of communication resources and notification delay.

It should be understood that the first information is different from RRC signaling or an SIB 1. In other words, the first information is not RRC signaling or an SIB 1. For example, the first information may be one piece of DCI (for example, may be one piece of new DCI), one sequence, or transmission information carried on a PBCH channel.

For example, the first synchronization signal may include a first SSB.

For example, the terminal devices may include a terminal device in an RRC connected state (RRC_CONNECTED), a terminal device in an RRC inactive state (RRC_INACTIVE), and a terminal device in an RRC idle state (RRC_IDLE). The first SSB may be an SSB defined in a current protocol. If there are SSBs with a plurality of configurations, the first SSB may be an SSB with any configuration. For example, the first SSB may be a short-periodicity SSB or a long-periodicity SSB.

According to a second aspect, an information transmission method is provided. The method may be performed by a network device, or may be performed by a chip, a chip system, or a processor that supports the network device in implementing the method, or may be performed by a logical node, a logical module, software, or the like that can implement all or some functions of the network device. The method includes: sending first information. The first information includes or indicates a transmission configuration of a first synchronization signal, and the transmission configuration of the first synchronization signal includes at least one of the following: a sending periodicity of the first synchronization signal, a sending offset of the first synchronization signal, or an actual transmission status of the first synchronization signal on a transmission occasion corresponding to the first synchronization signal.

According to the information transmission method provided in the second aspect, the network device may notify a terminal device of the transmission configuration of the first synchronization signal (for example, a first SSB) based on the first information. The transmission configuration of the first synchronization signal may be an updated or changed transmission configuration of the first synchronization signal, or the transmission configuration of the first synchronization signal may be an initial transmission configuration of the first synchronization signal (for example, a transmission configuration of the first synchronization signal before a change). Terminal devices in various states may all receive the first information, to obtain a transmission configuration change status of the first synchronization signal based on the first information. In this way, the terminal devices in various states can correctly receive the first synchronization signal, thereby ensuring normal running of communication. The transmission configuration of the synchronization signal is notified merely through a first message, which requires fewer communication resources and a shorter procedure time, thereby reducing overhead of communication resources and notification delay, and increasing the efficiency and speed of obtaining a sending configuration of the first synchronization signal by the terminal device.

For example, when a transmission configuration of the first SSB changes (for example, a beam used to send the first SSB changes, and/or a sending periodicity of the first SSB changes), the network device may notify the terminal device of a transmission configuration change status of the first SSB based on the first information.

For example, the sending periodicity of the first SSB may be the same as content indicated by a field "ssb-PeriodicityServingCell". An actual transmission status on a transmission occasion corresponding to the first SSB (an actual transmission status of the first SSB on the transmission occasion corresponding to the first SSB) may be the same as content indicated by a field "ssb-PositionsInBurst".

In a possible implementation of the first aspect or the second aspect, the transmission configuration of the first SSB may be a transmission configuration of the first SSB after the transmission configuration of the first SSB changes. In other words, the transmission configuration of the first SSB may be an updated transmission configuration of the first SSB. Alternatively, the transmission configuration of the first SSB may be an initial sending configuration of the first SSB (for example, a transmission configuration of the first SSB before a change).

In a possible implementation of the first aspect or the second aspect, the first information is carried in paging DCI, paging early indication DCI, or a paging message. In this implementation, existing signaling is reused for transmission of the first information, and there is no need to additionally use new signaling to transmit the first information, thereby reducing complexity of detecting the first information by the terminal device. In addition, the terminal devices in various states may all receive the first information, and the terminal devices in various states may correctly receive the first synchronization signal, thereby ensuring normal running of communication. A procedure consumes a short time period, thereby reducing overhead of communication resources and notification delay.

In a possible implementation of the first aspect or the second aspect, a first value (for example, "00") of a short message indicator field in the paging DCI indicates that the paging DCI includes the first information, and the first information is carried in a first field in the paging DCI; or a first value of a short message indicator field in the paging DCI indicates that the paging message includes the first information, and the first information is carried in the paging message. In this implementation, there is no need to use an additional field in the paging DCI to indicate that the paging DCI or the paging message includes the first information. Therefore, overheads of the paging DCI are not increased, and utilization of communication resources is improved.

In a possible implementation of the first aspect or the second aspect, a short message field (for example, a bit 5 to a bit 8 of a short message field) in the paging DCI carries the first information; or a short message field in the paging DCI indicates that the paging DCI includes the first information, and the first information is carried in a first field in the paging DCI; or a short message field in the paging DCI indicates that the paging message includes the first information, and the first information is carried in the paging message. In this implementation, there is no need to use an additional field in the paging DCI to carry the first information, and there is no need to use an additional field in the paging DCI to indicate that the paging message includes the first information. Therefore, overheads of the paging DCI are not increased, and utilization of communication resources is improved.

For example, the first field may be a new field or a new bit field in the paging DCI.

For example, a new field or a new bit field in the PEI DCI may alternatively be used to carry the first information.

In a possible implementation of the first aspect or the second aspect, the first information takes effect at an end of a paging periodicity corresponding to the received paging DCI, paging early indication DCI, or paging message carrying the first information; or the first information takes effect at an end of a configuration periodicity corresponding to the received paging DCI, paging early indication DCI, or paging message carrying the first information. In this implementation, it can be ensured that the terminal device and the network device have a consistent understanding of an effective time of the first information, and the terminal device and the network device may perform alignment in terms of when the transmission configuration of the first synchronization signal changes, thereby ensuring reliability and efficiency of transmission of the first information, and further ensuring transmission reliability of the first synchronization signal.

For example, an effective moment (effective time) of the first information may be understood as a transmission configuration effective moment, of the first synchronization signal (for example, the first SSB), included or indicated in the first information. The network device sends, starting from the effective moment of the first information, the first SSB to the terminal device based on a transmission configuration (a beam used to send an SSB and/or a sending periodicity of the SSB), of the first SSB, included or indicated in the first information. The terminal device receives the first SSB based on the transmission configuration of the first SSB (for example, the sending periodicity of the first SSB and a transmit beam of the first SSB) in the first information.

In a possible implementation of the first aspect or the second aspect, the first information is carried in first DCI, the first DCI is different from paging DCI or paging early indication DCI, and a transmission occasion of the first DCI is the same as a transmission occasion of the paging DCI or the paging early indication DCI. In this implementation, existing signaling is reused for a transmission occasion of the first information, and there is no need to additionally use a new transmission occasion to transmit the first information, thereby reducing complexity of detecting the first information by the terminal device. In addition, the terminal devices in various states may all receive the first information, and the terminal devices in various states may correctly receive the first synchronization signal, thereby ensuring normal running of communication.

For example, that the transmission occasion of the first information is the same as the transmission occasion of the paging DCI or the paging early indication DCI may include: The transmission occasion of the first information is a transmission occasion of the complete paging DCI or paging early indication DCI; or the transmission occasion of the first information is a transmission occasion of specific paging DCI or specific paging early indication DCI, for example, a transmission occasion of paging DCI or paging early indication DCI corresponding to UE_ID of the terminal device.

For example, that the transmission occasion of the first information is the same as the transmission occasion of the paging DCI or the PEI DCI may include: The terminal device may receive the first DCI on any PO or PEI-O in one DRX cycle; or the terminal device may receive the first DCI on a PO or PEI-O corresponding to UE_ID of the terminal device.

In a possible implementation of the first aspect or the second aspect, a transmission occasion of the first information is a first transmission occasion, and the first transmission occasion is a transmission occasion of paging DCI corresponding to a terminal device with a first ID, or a transmission occasion of paging early indication DCI corresponding to a terminal device with a first ID. In this implementation, a plurality of terminal devices (for example, all terminal devices) detect the first information on the same PEI-O and PO. In other words, the plurality of terminal devices detect the same transmission occasion. The network device does not need to separately send the first information to each terminal device, thereby reducing the amount of first information to be sent by the network device (for example, the first information needs to be sent only one time), and reducing overheads and power consumption of sending the first message by the network device. In addition, an effective time of the first message may be earlier, thereby improving reliability and efficiency of the first information.

For example, a plurality of terminal devices (for example, all terminal devices in a cell) all correspond to the first ID. In other words, the plurality of terminal devices correspond to the same ID (the first ID). The first ID is UE_ID corresponding to all of the plurality of terminal devices. For example, the first ID (for example, UE_ID=0) may be a value predefined in a protocol, or a value uniformly configured by the base station for all terminal devices (for example, configured for the terminal device based on system information).

Optionally, when all the terminal devices correspond to the same transmission occasion of the first information, the effective time of the first information may be as follows: The first information takes effect at an X^{th} time unit after the transmission occasion (for example, a PO, a PEI-O, or a PDSCH) corresponding to the first information; or the first information takes effect at an end of a preset time length starting from the transmission occasion corresponding to the first information.

In a possible implementation of the first aspect or the second aspect, a start moment of a transmission occasion of the first information is one of the following: an M^{th} time unit before the transmission occasion of the first synchronization signal; or before the transmission occasion of the first synchronization signal and separated from the transmission occasion of the first synchronization signal by a preset time length; or before the transmission occasion of the first synchronization signal and separated from a start sending moment of the first synchronization signal by a time interval of a preset time length. In this implementation, the terminal device and the network device may perform alignment in terms of the transmission occasion of the first information, thereby ensuring reliability and efficiency of transmitting the first information. In addition, the plurality of terminal devices (for example, all terminal devices in a cell) detect the first information on the same transmission occasion. In other words, the plurality of terminal devices detect the same transmission occasion. The network device does not need to separately send the first information to each terminal device, thereby reducing the amount of first information to be sent by the network device, and reducing overheads and power consumption of sending the first message by the network device. Before the transmission occasion of the first synchronization signal, the terminal device may obtain the transmission configuration of the first synchronization signal in a timely manner, to ensure that the terminal device can correctly receive the first synchronization signal.

In a possible implementation of the first aspect or the second aspect, a start moment of a transmission occasion of the first information is an R^{th} time unit before a transmission occasion of a second synchronization signal; or a start moment of a transmission occasion of the first information is before a transmission occasion of a second synchronization signal and separated from the transmission occasion of the second synchronization signal by a preset time length; or a start moment of a transmission occasion of the first information is before a transmission occasion of a second synchronization signal and separated from a start sending moment of the second synchronization signal by a time interval of a preset time length; and the second synchronization signal is different from the first synchronization signal. In this implementation, the terminal device and the network device may perform alignment in terms of the transmission occasion of the first information, thereby ensuring reliability and efficiency of transmitting the first information. The plurality of terminal devices detect the same transmission occasion, and the network device does not need to separately send the first information to each terminal device, thereby reducing the amount of first information to be sent by the network device, and reducing overheads and power consumption of sending the first message by the network device. Before the transmission occasion of the first synchronization signal, the terminal device may obtain the transmission configuration of the first synchronization signal in a timely manner, to ensure that the terminal device can correctly receive the first synchronization signal.

For example, if there are SSBs with a plurality of configurations, the first synchronization signal may be an SSB with any configuration, and the second synchronization signal may be an SSB with another configuration. For example, the first synchronization signal is a short-periodicity SSB (the first SSB), the second synchronization signal is a long-periodicity SSB (the second SSB), and a transmission occasion of the first SSB is different from a transmission occasion of the second SSB.

In a possible implementation of the first aspect or the second aspect, a time domain resource occupied by a transmission occasion of the first information is partially or completely the same as a time domain resource occupied by the transmission occasion of the first synchronization signal, and a frequency domain resource occupied by the transmission occasion of the first information is different from a frequency domain resource occupied by the transmission occasion of the first synchronization signal. In this implementation, the plurality of terminal devices (for example, all terminal devices in a cell) detect the first information on the same transmission occasion, and the network device does not need to separately send the first information to each terminal device, thereby reducing the amount of first information to be sent by the network device. In addition, the first information and the first synchronization signal are sent in a frequency division manner, thereby reducing overheads and power consumption of sending the first message by the network device.

In a possible implementation of the first aspect or the second aspect, a time domain resource occupied by a transmission occasion of the first information is partially or completely the same as a time domain resource occupied by a transmission occasion of a second synchronization signal, a frequency domain resource occupied by the transmission occasion of the first information is different from a frequency domain resource occupied by the transmission occasion of the second synchronization signal, and the second synchronization signal is different from the first synchronization signal. In this implementation, in a dual-synchronization signal configuration, the plurality of terminal devices (for example, all terminal devices in a cell) detect the first information on the same transmission occasion, and the network device does not need to separately send the first information to each terminal device, thereby reducing the amount of first information to be sent by the network device. In addition, the first information and the second synchronization signal are sent in a frequency division manner, thereby reducing overheads and power consumption of sending the first message by the network device.

In a possible implementation of the first aspect or the second aspect, the first information takes effect in an N^{th} time unit after the corresponding transmission occasion ends; or the first information takes effect at an end of a preset time length after the corresponding transmission occasion ends; or the first information takes effect at the start sending moment of the first synchronization signal that occurs after the first information. In this implementation, it can be ensured that the terminal device and the network device have a consistent understanding of an effective time of the first information, and the terminal device and the network device may perform alignment in terms of when the transmission configuration of the first synchronization signal changes, thereby ensuring reliability and efficiency of transmission of the first information, and further ensuring transmission reliability of the first synchronization signal.

Optionally, the transmission occasion of the first information, the effective time of the first information, the preset time length, and the like may be predefined, or may be indicated by the network device to the terminal device through signaling, or may be preconfigured (or configured).

According to a third aspect, a communication apparatus is provided. The apparatus includes modules (for example, including a processing module and an interface module) configured to perform the steps in any one of the first aspect or the possible implementations of the first aspect. The apparatus may be a terminal device, or may be a chip, a chip system, a processor, or the like in the terminal device.

According to a fourth aspect, a communication apparatus is provided. The apparatus includes at least one processor and a memory, and the at least one processor is configured to perform the method in any one of the first aspect or the possible implementations of the first aspect. The apparatus may be a terminal device, or may be a chip, a chip system, a processor, or the like in the terminal device.

According to a fifth aspect, a communication apparatus is provided. The apparatus includes at least one processor and an interface circuit, and the at least one processor is configured to perform the method in any one of the first aspect or the possible implementations of the first aspect. The apparatus may be a terminal device, or may be a chip, a chip system, a processor, or the like in the terminal device.

According to a sixth aspect, a communication apparatus is provided. The apparatus includes modules (for example, including a processing module and an interface module) configured to perform the steps in any one of the second aspect or the possible implementations of the second aspect. The apparatus may be a network device, may be a chip, a chip system, a processor, or the like in the network device, or may be a logical node, a logical module, software, or the like that can implement all or some functions of the network device.

According to a seventh aspect, a communication apparatus is provided. The apparatus includes at least one processor and a memory, and the at least one processor is configured to perform the method in any one of the second aspect or the possible implementations of the second aspect. The apparatus may be a network device, may be a chip, a chip system, a processor, or the like in the network device, or may be a logical node, a logical module, software, or the like that can implement all or some functions of the network device.

According to an eighth aspect, a communication apparatus is provided. The apparatus includes at least one processor and an interface circuit, and the at least one processor is configured to perform the method in any one of the second aspect or the possible implementations of the second aspect. The apparatus may be a network device, may be a chip, a chip system, a processor, or the like in the network device, or may be a logical node, a logical module, software, or the like that can implement all or some functions of the network device.

According to a ninth aspect, a terminal device is provided. The terminal device includes the communication apparatus provided in the third aspect, or the terminal device includes the communication apparatus provided in the fourth aspect, or the terminal device includes the communication apparatus provided in the fifth aspect.

According to a tenth aspect, a network device is provided. The network device includes the communication apparatus provided in the sixth aspect, the network device includes the communication apparatus provided in the seventh aspect, or the network device includes the communication apparatus provided in the eighth aspect.

According to an eleventh aspect, a computer program product is provided. The computer program product includes a computer program. When the computer program is executed by a processor, the method in any one of the first aspect or the possible implementations of the first aspect, or the method in any one of the second aspect or the possible implementations of the second aspect is performed.

According to a twelfth aspect, a computer-readable storage medium is provided. The computer-readable storage medium stores a computer program. When the computer program is executed, the method in any one of the first aspect or the possible implementations of the first aspect, or the method in any one of the second aspect or the possible implementations of the second aspect is performed.

According to a thirteenth aspect, a chip is provided. The chip includes a processor, configured to invoke a computer program from a memory and run the computer program, so that a communication device in which the chip is installed performs the method in any one of the first aspect or the possible implementations of the first aspect, or the method in any one of the second aspect or the possible implementations of the second aspect.

### BRIEF DESCRIPTION OF DRAWINGS

FIG. 1 is a diagram of an example of an SSB structure;
FIG. 2 is a diagram of an example of a distribution of POs in time domain;
FIG. 3 is a diagram of an example of a configuration periodicity;
FIG. 4 is a diagram of an example of a distribution of PEI-Os;
FIG. 5 is a diagram of an example of two sets of SSB configurations according to an embodiment of this application;
FIG. 6 is a diagram of an example of a communication system applicable to a method in this application according to an embodiment of this application;
FIG. 7 is a diagram of an example of a radio access network RAN according to an embodiment of this application;
FIG. 8 is a schematic flowchart of an example of an information transmission method according to an embodiment of this application;
FIG. 9 is a diagram of an example of a sending occasion and an effective moment of first information according to an embodiment of this application;
FIG. 10 is a diagram of another example of a sending occasion and an effective moment of first information according to an embodiment of this application;
FIG. 11 is a diagram of still another example of a sending occasion and an effective moment of first information according to an embodiment of this application;
FIG. 12 is a diagram of yet another example of a sending occasion and an effective moment of first information according to an embodiment of this application;
FIG. 13 is a diagram of still yet another example of a sending occasion and an effective moment of first information according to an embodiment of this application;
FIG. 14 is a diagram of a further example of a sending occasion and an effective moment of first information according to an embodiment of this application;
FIG. 15 is a diagram of a still further example of a sending occasion and an effective moment of first information according to an embodiment of this application;
FIG. 16 is a diagram of a yet further example of a sending occasion and an effective moment of first information according to an embodiment of this application;
FIG. 17 is a block diagram of an example of a communication apparatus according to an embodiment of this application;
FIG. 18 is a block diagram of another example of a communication apparatus according to an embodiment of this application;
FIG. 19 is a block diagram of an example of a communication apparatus according to an embodiment of this application;
FIG. 20 is a block diagram of another example of a communication apparatus according to an embodiment of this application;
FIG. 21 is a block diagram of an example of a terminal device according to an embodiment of this application; and
FIG. 22 is a block diagram of an example of a network device according to an embodiment of this application.

### DESCRIPTION OF EMBODIMENTS

The following describes technical solutions of this application with reference to accompanying drawings.

In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

Compared with a 4th generation (4th Generation, 4G) mobile communication network, in a 5G network, a transmission bandwidth increases sharply, and a larger peak-to-average power ratio (peak-to-average power ratio, PAPR) further reduces efficiency of a power amplifier (power amplifier, PA). Consequently, transmit power consumption of a radio access network device (a base station is used as an example for description) in the 5G network increases sharply. In addition, a sharp increase in transmission channels of the base station in the 5G network also causes a sharp increase in static power consumption of a 5G communication system. In addition, a higher frequency band deployed in the 5G network causes a smaller coverage area, and more densely deployed base stations further increase overall power consumption of the entire network. Currently, power consumption of a single 5G base station is generally two to three times that of a typical 4G base station. For example, based on related data statistics, typical power consumption of a single remote radio unit (remote radio unit, RRU) is 660 W in the 4G era, and typical power consumption (energy consumption) of a single active antenna unit (active antenna unit, AAU) increases to 1400 W in the 5G era. Such high energy consumption of the base station in the 5G network is not conducive to environmental protection and sustainable social development, and causes huge electricity costs. Currently, energy costs account for 23% of overall operating expenses of operators. China Mobile is used as an example. Electricity costs of China Mobile in 2020 have reached 3.8 billion yuan. Therefore, research on energy-saving communication technologies is particularly important for continuous evolution of 5G.

Another major reason for high power consumption of the 5G network is that the base station needs to periodically send various common signals. For example, typical common signals include messages or signals such as a synchronization signal block (synchronization signal block, SSB) and a system information block type 1 (system information block type 1, SIB 1). Overheads of sending these common signals by the base station are large, causing more dynamic power consumption. In addition, because these common signals need to be frequently sent (for example, a sending periodicity of a typical SSB or the SIB 1 is 20 ms, in other words, the base station needs to send the SSB or the SIB 1 one time every 20 ms), it is very difficult for the base station to enter a deeper dormant state (a specific delay is required for enabling hardware/software), causing large static power consumption overheads on the base station side. Based on this, a researcher proposes that power consumption of a network device may be reduced by dynamically adjusting a common signal sending configuration (namely, a transmission configuration). For example, sending of the common signal is reduced in a scenario in which network load is low.

The following briefly describes some common signals in this application.

### I. SSB and configuration information of the SSB

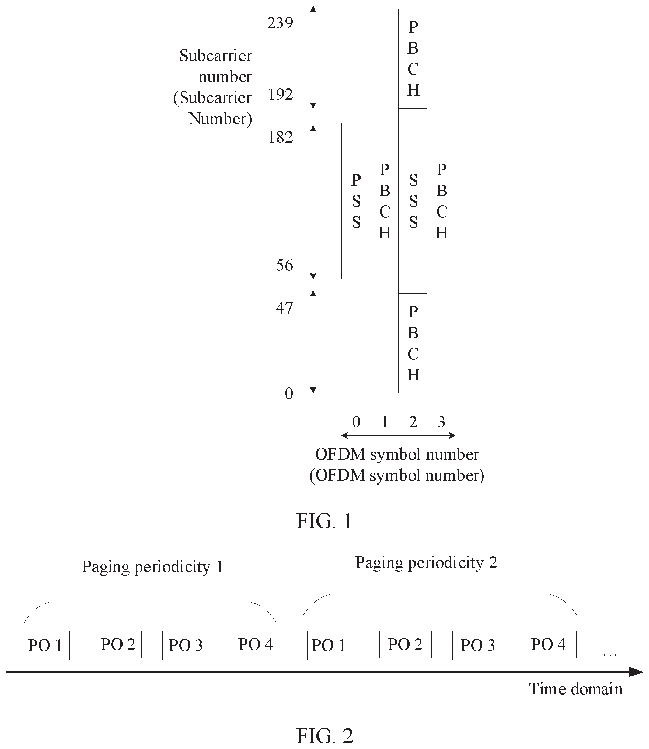

FIG. 1 is a diagram of an example of an SSB structure. As shown in FIG. 1, an SSB includes two parts: a synchronization signal SS and a PBCH. The SS further includes a primary synchronization signal (primary synchronization signal, PSS) and a secondary synchronization signal (secondary synchronization signal, SSS). Therefore, it may also be considered that the SSB includes three parts: the PSS, the PBCH, and the SSS. As shown in FIG. 1, in time domain, the SSB occupies four consecutive time domain symbols, for example, orthogonal frequency division multiplexing (orthogonal frequency division multiplexing, OFDM) symbols. In frequency domain, the SSB occupies 20 resource blocks (resource block) RBs, namely, 240 subcarriers (subcarrier, SC).

The SS and the PBCH are jointly used to obtain a cell identifier (Cell ID), perform downlink timing (find a reference point for downlink transmission, for example, a frame boundary), and obtain a necessary system message, for example, obtain a position of a time-frequency resource received on a physical downlink control channel (physical downlink control channel, PDCCH) corresponding to an SIB 1, and obtain an offset value Kssb of a frequency domain resource grid of the SSB relative to a common resource block (common resource block, CRB). An SSB in new radio (new radio, NR) mainly has two functions: 1. cell synchronization and master system message block (master information block, MIB) obtaining; and 2. wide beam training on a base station side.

For cell synchronization and MIB obtaining, the PSS and the SSS carry a physical cell identifier (physical cell identifier, PCI). A terminal device obtains the PCI by detecting the PSS and the SSS. In addition, the PBCH in the SSB carries an SSB index (SSB index). Each SSB index corresponds to one SSB sending position or sending occasion. The terminal device completes downlink timing synchronization by detecting the SSB index and based on a detection moment.

For wide beam training on the base station side, one SSB format (SSB pattern) includes a plurality of SSB indexes, and different SSB indexes correspond to different base station transmit beams. One SSB pattern defines a group of consecutive SSBs or a plurality of SSBs in one periodicity.

In other words, the SSB pattern defines a possible time domain position (of an SSB burst) in a half frame (Half Frame). Because each SSB is sent through a different beam, in other words, each SSB corresponds to one transmit beam, the terminal device may select the best SSB index (namely, an index corresponding to an SSB with the maximum received strength) by detecting the SSB, to complete wide beam training. In addition, the terminal device may alternatively receive the same SSB through different receive beams, to complete receive beam training on a terminal device side.

Functions of a wide beam on a base station side include: 1. The terminal device receives, at a position corresponding to the SSB index (namely, the best SSB index), an SIB 1 and a paging message (Paging) that are sent by the base station through the wide beam, to improve coverage capabilities of the SIB 1 and paging. 2. The terminal device sends a physical random access channel (physical random access channel, PRACH) at a position corresponding to the SSB index (namely, the best SSB index), that is, sends a preamble (Preamble). The base station may perform receiving through the wide beam, to ensure a PRACH receiving success probability. 3. After the terminal device completes an initial access and establishes a radio resource control (radio resource control, RRC) connection, the base station may perform narrow beam training based on the wide beam, that is, train only a narrow beam within a range of the wide beam, to reduce narrow beam training overheads.

The following describes detection of the SSB by the terminal device.

Before detecting the SSB, the terminal device does not learn of a specific time-frequency resource position of the SSB. In other words, the terminal device needs to blindly detect a position of the SSB. However, because a cell bandwidth in NR is very wide, if the terminal device attempts to detect the SSB at each frequency, an access speed of the terminal device is very slow. Therefore, a synchronization raster (synchronization raster) is defined in an NR protocol, and has different sizes on different frequency bands, which are separately 1200 kHz, 1.44 MHz, and 17.28 MHz. The terminal device only needs to attempt to detect the SSB one by one at an interval of a synchronization raster, thereby improving the speed of detecting the SSB by the terminal device.

For example, Table 1 is a table of GSCN parameters for the global frequency raster (GSCN parameters for the global frequency raster). "GSCN" represents a global synchronization channel number (global synchronization channel number, GSCN). Each GSCN corresponds to a determined and absolute frequency position. In other words, each frequency domain position corresponds to a unique GSCN. A system places the SSB on these GSCNs, and an alignment manner is that a subcarrier 0 (or a position at which a resource element (resource element, RE) is equal to 0) in a 10^{th} RB of the SSB is aligned with the GSCNs. The terminal device sequentially blindly detects the SSB on these GSCNs.

**Table 1**

| Frequency range (range of the frequencies) (MHz) | SSB frequency domain position (SS block frequency position SS_{REF}) | GSCN | Range of GSCNs (Range of GSCNs) |
|---|---|---|---|
| 0 to 3000 | N*1200 kHz+M*50 kHz, N=1:2499, M∈{1, 3, 5} (note) | 3N+(M-3)/2 | 2 to 7498 |
| 3000 to 24250 | 3000 MHz+N*1.44 MHz | 7499+N | 7499 to 22255 |
| | N=0:14756 | | |
| 24250 to 100000 | 24250.08 MHz+N*17.28 MHz | 22256+N | 22256 to 26639 |
| | N=0:4383 | | |
| Note (NOTE): A default value of an operating band that supports only SCS spaced channel rasters is M=3 (The default value for operating bands with SCS spaced channel raster is M=3). | | | |

As shown in Table 1, the terminal device only needs to detect the SSB at a frequency determined based on SS_{REF}, and does not need to detect the SSB at all frequencies, thereby improving the speed and efficiency of detecting the SSB by the terminal device.

In addition, during initial access, the terminal device assumes that a periodicity in which a network device sends the SSB is 20 ms. In other words, if the terminal device does not detect the SSB in a synchronization raster after waiting for 20 ms, the terminal device may continue to detect the SSB in another synchronization raster.

It can be learned that the frequency domain position of the SSB is defined by the synchronization raster (Synchronization Raster).

A time domain position of the SSB is defined by an SSB pattern (SSB pattern). The SSB pattern may also be referred to as an SSB format. One SSB pattern specifies possible time domain positions of a group of consecutive SSBs in a half frame (Half Frame). Currently, five SSB patterns are defined for a licensed spectrum (unshared spectrum) in a protocol. Each pattern has a respective applicable subcarrier spacing (subcarrier spacing, SCS). However, each SCS corresponds to only one or two available SSB patterns.

In conclusion, it can be learned that the configuration information of the SSB (namely, a sending configuration of the SSB) includes the frequency domain position of the SSB, the time domain position of the SSB, and a beam used to send the SSB. The time domain position of the SSB is determined by the SSB pattern and a sending periodicity. After the terminal device detects the SSB, the terminal further receives the SIB 1. The SIB 1 includes an actual sending periodicity (indicated by a field "ssb-PeriodicityServingCell" in the SIB 1) of the SSB and a beam (indicated by a field "ssb-PositionsInBurst" in the SIB 1) actually used to send the SSB. Based on the foregoing information and the detected SSB format, the terminal device may learn of an actual sending configuration (including a periodicity, an SSB beam sent in each periodicity, and the like) of the SSB.

For example, the field "ssb-PositionsInBurst" includes the following content:

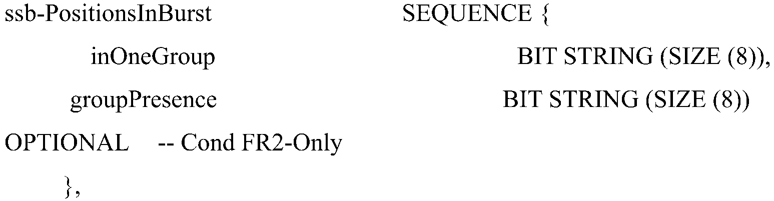

In conclusion, it can be learned that the configuration information of the SSB (namely, the sending configuration of the SSB) includes the frequency domain position of the SSB, the time domain position of the SSB, and the beam used to send the SSB. The time domain position of the SSB is determined based on both a predefined SSB format (SSB pattern) and the actual sending periodicity of the SSB. The beam used to send the SSB is indicated by the field "ssb-PositionsInBurst" in the SIB 1.

The terminal device learns of SSB sending information based on the sending configuration of the SSB, and receives the SSB based on the SSB sending information, to perform a series of subsequent processing procedures based on the SSB. The following two procedures are mainly included:
1. SSB-related measurement, for example, including radio link monitoring (radio link monitoring, RLM), radio resource management (radio resource management, RRM), beam failure detection (beam failure detection, BFD), beam failure recovery (beam failure recovery, BFR), and automatic gain control (automatic gain control, AGC); and
2. determining of a transmission occasion for transmission with a mapping relationship with the SSB, for example, including a random access channel (random access channel, RACH), a paging message (Paging), and the SIB 1.

Currently, when the sending configuration of the SSB changes, for example, the beam actually used to send the SSB changes (that is, a value of "ssb-PositionsInBurst" changes), or the actual sending periodicity of the SSB changes (that is, a value of the field "ssb-PeriodicityServingCell" changes), the base station mainly notifies the terminal device in the following two manners:
A first manner is an RRC reconfiguration. To be specific, RRC signaling is sent to notify the terminal device. This solution is applicable only to a terminal device in an RRC connected state (RRC_CONNECTED).

A second manner is a system message (system information, SI) updating procedure. This solution may be applied to all terminal devices, including a terminal device in an RRC connected state (RRC_CONNECTED), a terminal device in an RRC inactive state (RRC_INACTIVE), and a terminal device in an RRC idle state (RRC_IDLE).

The following briefly describes the SI updating procedure.

Idle discontinuous reception (idle discontinuous reception, I-DRX) is an energy-saving technology for paging (Paging) information of the terminal device. In this technology, paging occasions (paging occasion, PO) of the terminal device are evenly separated in a time dimension, so that from a perspective of the terminal device side, paging downlink control information (downlink control information, DCI) of the terminal device needs to be detected only on a determined paging occasion in a long periodicity (that is, in a paging periodicity), to detect whether system information changes or the paging information of the terminal device is generated. This manner takes effect for all terminal devices, especially the terminal device in the RRC_IDLE state or the RRC_INCATIVE state.

Specifically, because there is a mapping relationship between an ID and a PO of the terminal device, each terminal device detects a PO in a paging frame (paging frame, PF) corresponding to the terminal device based on a configured ID, and detects paging DCI (Paging DCI) on the PO. The paging DCI is carried on a PDCCH scrambled by using a paging-radio network temporary identifier (paging-radio network temporary identifier, P-RNTI). The paging DCI may include configuration information of the paging message, and the terminal device may receive the paging message based on the paging DCI. One PO may correspond to one or more terminal devices. In other words, a plurality of terminal devices may detect the paging DCI on the same PO. One terminal device corresponds to only one PO in one paging periodicity.

For example, FIG. 2 is a diagram of an example of a distribution of POs in time domain. As shown in FIG. 2, there may be a plurality of POs in one paging periodicity. The base station may send the paging DCI on any PO in one paging periodicity, and the terminal device may detect the paging DCI on each PO. A length of the paging periodicity may be understood as a time length for which one paging periodicity lasts, for example, may be 20 ms or 40 ms. The terminal device may detect the paging DCI on a PO included in each of a plurality of paging periodicities. FIG. 2 shows two paging periodicities: a paging periodicity 1 and a paging periodicity 2. Each paging periodicity includes four POs: a PO 1 to a PO 4. Time lengths corresponding to the paging periodicity 1 and the paging periodicity 2 are the same. On one PO, the terminal device may have a plurality of monitoring occasions (monitoring occasion, MO) of the paging DCI. In other words, one PO includes a plurality of PDCCH monitoring occasions (PDCCH MO). A monitoring occasion of one PDCCH corresponds to one SSB beam, and partial space domain information of the PDCCH is the same as that of the SSB, for example, used beams are the same. A quantity of PDCCH MOs included in one PO is related to a quantity of SSB beams actually sent by the base station. The terminal device detects the paging DCI on the PDCCH MO. The paging DCI includes the following fields:

### (1) Short message indicator (Short Message indicator) field with a length of 2 bits:

This field mainly indicates a function of subsequent content in the paging DCI. If a bit value of the two bits is "11", it indicates that the paging DCI indicates that there is a subsequent paging message and indicates a system information change; or if a bit value of the two bits is "10", it indicates that the paging DCI only indicates a system message change; or if a bit value of the two bits is "01", it indicates that the paging DCI only indicates that there is a subsequent paging message; or if a bit value of the two bits is "00", it indicates "reserved". The paging message is carried on a physical downlink shared channel (physical downlink share channel, PDSCH).

### (2) Short message (Short Message) field with a length of 8 bits:

This field mainly indicates specific system information that has changed. Specifically, first four bits of the field separately indicate different system information functions, and last four bits are reserved. This field has a function or has indication effect only when the "Short Message indicator" field indicates that system information has changed.

(3) Paging information-related indication field including fields that indicate a time-frequency resource, a mapping manner, and the like of the paging information, where the terminal device may receive the paging message based on the paging information-related indication field.

When the paging DCI indicates that system information changes, all terminal devices detect system information DCI on a configured monitoring occasion of the system information DCI. The system information DCI is carried on a PDCCH scrambled by using an SI-RNTI. The terminal device determines information such as a time-frequency resource of the SI based on the detected system information DCI, receives the SIB 1 scheduled based on the system information DCI, and obtains, based on the SIB 1, a changed beam (indicated by the field "ssb-PositionsInBurst" in the SIB 1) used to send the SSB and/or a changed sending periodicity (indicated by the field "ssb-PeriodicityServingCell" in the SIB 1) of the SSB.

By using the foregoing SI updating procedure, the terminal device may obtain the changed beam used to send the SSB and/or the changed sending periodicity of the SSB.

Usually, when the system information (for example, the SIB 1) does not change frequently, a default system message change periodicity of the terminal device is 3 hours. In other words, the base station updates the system information one time with a periodicity of 3 hours (every 3 hours).

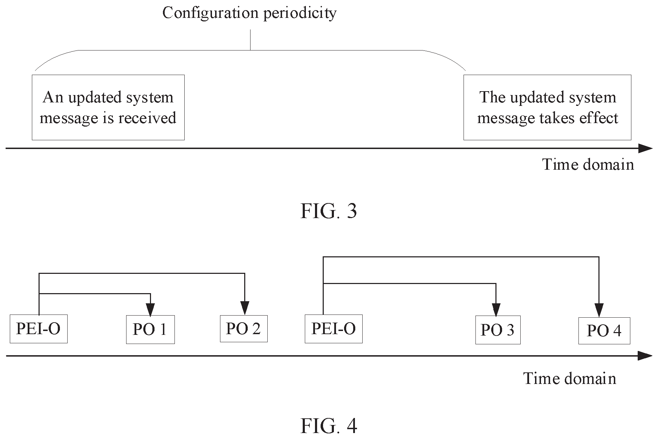

In addition, when the terminal detects updated system information, the updated system information takes effect based on a configuration periodicity. For example, FIG. 3 is a diagram of an example of a configuration periodicity. The configuration periodicity may be understood as a length of a time interval between a moment at which the terminal device receives the updated system information (for example, the SIB 1) and an effective moment of the updated system information. The effective moment of the system information may be understood as an effective moment of a sending configuration of an SSB included in the SIB 1 or a moment at which the sending configuration of the SSB changes. Alternatively, the effective moment of the system information may also be understood as a moment at which the terminal device starts to use a configuration or content in the system information, for example, a moment at which the terminal device starts to use a configuration (indicated by the field "ssb-PositionsInBurst" and/or indicated by the field "ssb-PeriodicityServingCell") in the SIB 1 to receive the SSB. The configuration periodicity may be used to determine the effective moment or an effective time of the system information. In other words, the updated system information may not take effect immediately. For example, the configuration periodicity may be a length of a time interval between a moment (namely, a moment at which the SIB 1 is received) at which the terminal device receives an updated sending configuration of the SSB (for example, the beam used to send the SSB changes, and/or the sending periodicity of the SSB changes) and a moment at which the terminal device uses the updated sending configuration of the SSB (uses the changed beam used to send the SSB, and/or uses the changed sending periodicity of the SSB).

For example, the configuration periodicity may be configured to be 2 times, 4 times, 8 times, 16 times, or the like of the paging periodicity.

Certainly, the base station also needs to send the SSB based on the updated sending configuration of the SSB (a beam used for sending the SSB and/or a sending periodicity of the SSB) and the configuration periodicity starting from the effective moment or the effective time of the system information.

When a large quantity of terminal devices camp on or are served by a cell, one PO may correspond to a plurality of terminal devices. Because the paging DCI does not include identifiers for distinguishing between different terminal devices, provided that a terminal device is paged on one PO, all terminal devices (that is, a plurality of terminal devices that detect the paging DCI on the same PO) on the PO detect paging information scheduled based on the paging DCI. This causes unnecessary energy consumption. Therefore, a paging early indication (paging early indication, PEI) mechanism is introduced in a current protocol. In the PEI mechanism, the terminal device pre-detects PEI DCI before a PO corresponding to the terminal device. When the PEI DCI indicates that no paging DCI is transmitted on a PO corresponding to the terminal device, the terminal device may not perform detection on the PO corresponding to the terminal device. Optionally, the PEI DCI may also be referred to as DCI scrambled by using a PEI-RNTI.

An occasion (PEI occasion, PEI-O) on which the terminal device detects the paging early indication DCI (PEI DCI) may be referred to as a PEI monitoring occasion. Based on a PO configuration, for example, a distribution of PEI-Os may be shown in FIG. 4. One PEI-O may correspond to one or more POs.

### 2. Dual-SSB configuration

Currently, sending periodicities of SSBs are usually frequent (a typical periodicity is 20 ms). In addition, the same beam is used to send the SSB in each sending periodicity (that is, there is only one SSB configuration and one corresponding parameter "ssb-PositionsInBurst"). Therefore, an SSB sending mode may be dynamically adjusted by configuring two sets of SSBs.

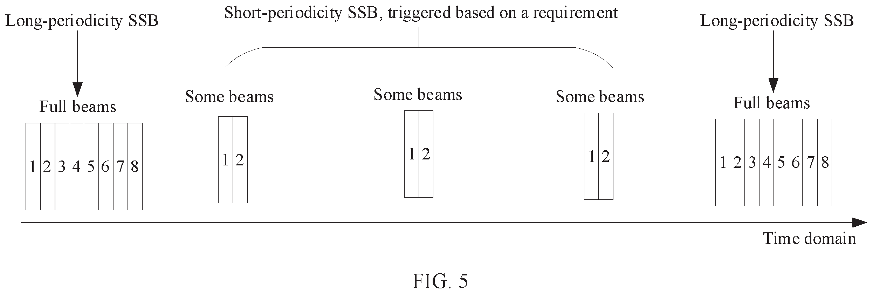

For example, FIG. 5 is a diagram of an example of two sets of SSB configurations according to an embodiment of this application.

As shown in FIG. 5, a set of basic SSB transmission is configured as a basic configuration, to ensure basic network access and measurement performance. A transmission periodicity (namely, a sending periodicity) of the SSB configuration is usually long (for example, 160 ms), and beams for transmitting an SSB are full (for example, full beams, for example, a beam 1 to a beam 8 shown in FIG. 5). For example, the SSB may be referred to as a basic SSB or a long-periodicity SSB.

In addition, a set of short-periodicity SSBs are configured, to serve, according to a requirement, a user covered by a base station. For example, a transmission periodicity of the short-periodicity SSB may dynamically change based on a load. For example, in a scenario in which the load is light, the transmission periodicity of the short-periodicity SSB may be increased or prolonged, to reduce overheads of transmitting the SSB by a network and reduce power consumption of the base station. In addition, a transmit beam (namely, a beam used to send the short-periodicity SSB) of the short-periodicity SSB may dynamically change based on a distribution of terminal devices. For example, when the terminal devices are distributed in a centralized manner, only some SSB beams in such a direction may be transmitted (that is, only the short-periodicity SSB is sent on the beam corresponding to the direction, for example, a beam 1 and a beam 2 shown in FIG. 5), that is, the beam for transmitting the short-periodicity SSB is some beams, to reduce overheads of transmitting the SSB by the network and reduce power consumption.

In conclusion, when the sending configuration of the SSB changes (for example, the beam used to send the SSB changes, and/or the sending periodicity of the SSB changes), the SSB may be an SSB defined in a current protocol, or may be the short-periodicity SSB or the long-periodicity SSB in the dual-SSB configuration. The base station may notify the terminal device in the following manner:

If the base station notifies the terminal device in an RRC reconfiguration manner, this manner is applicable only to the terminal device in the RRC connected state (RRC_CONNECTED). Consequently, the terminal device in the RRC inactive state (RRC_INACTIVE) and the terminal device in the RRC idle state (RRC_IDLE) cannot learn that the sending configuration of the SSB changes, these terminal devices cannot correctly receive the SSB, and normal running of communication cannot be ensured, thereby affecting communication efficiency.

If the base station notifies the terminal device in an SI updating manner, this manner is applicable to all terminal devices. However, the overall SI updating procedure is complex (the paging DCI needs to be detected, then the system information DCI is detected, and finally the SIB 1 is detected and the changed sending configuration of the SSB is obtained by using the SIB 1), and transmission needs to be performed through a large amount of signaling. Consequently, the procedure is time-consuming, and communication resources are wasted. In addition, an effective time of the SIB 1 is long (it can be considered that the SIB 1 takes effect only after a configured periodicity ends), and a delay is long. In addition, overheads of the SI updating procedure are large. For example, only the field "ssb-PositionsInBurst" and/or the field "ssb-PeriodicityServingCell" in the SIB 1 need/needs to be updated (that is, one or two information elements (Information Element, IE) are updated), but the entire SIB 1 needs to be sent. Consequently, communication resource overheads are large, and utilization of communication resources is reduced.

In view of this, this application provides an information transmission method and a communication apparatus. A network device may notify a terminal device of a transmission configuration of an SSB (for example, a changed transmission configuration of the SSB or an initial transmission configuration of the SSB) based on first information. Terminal devices in various states may all receive the first information, to obtain a transmission configuration change status of the SSB based on the first information. In this way, the terminal devices in various states can correctly receive the SSB, thereby ensuring normal running of communication. In addition, the transmission configuration of the synchronization signal is notified merely through a first message, which requires fewer communication resources and a shorter procedure time, thereby reducing overhead of communication resources and notification delay

For example, when the transmission configuration of the SSB changes (for example, a beam used to send the SSB changes, and/or a sending periodicity of the SSB changes), the SSB may be an SSB defined in a current protocol, or may be a short-periodicity SSB or a long-periodicity SSB in a dual-SSB configuration. The base station may notify the terminal device of the transmission configuration change status of the SSB according to the method provided in this application. The terminal device may include: a terminal device in an RRC connected state (RRC_CONNECTED), a terminal device in an RRC inactive state (RRC_INACTIVE), and a terminal device in an RRC idle state (RRC_IDLE).

It should be understood that the method provided in this application may be applied to a scenario in which the transmission configuration of the SSB is sent and received. For example, when the transmission configuration of the SSB changes, an updated transmission configuration of the SSB is sent, or an initial transmission configuration of the SSB (for example, a transmission configuration of the SSB before updating) is sent.

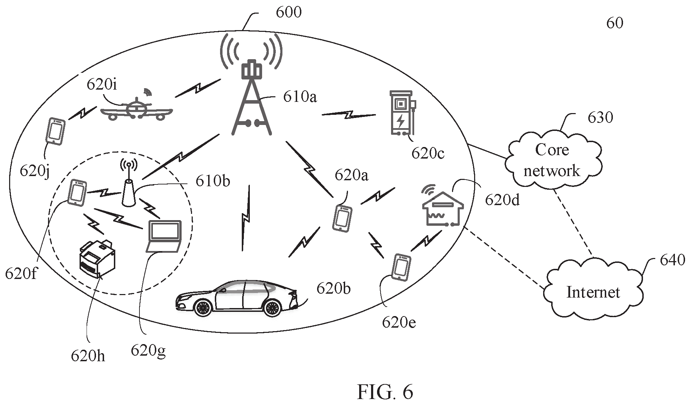

For ease of understanding of embodiments of this application, a communication system to which an embodiment of this application is applicable is first briefly described with reference to FIG. 6.

FIG. 6 is a diagram of an example of a communication system 60 applicable to embodiments of this application. As shown in FIG. 6, the communication system 60 includes a radio access network (radio access network, RAN) 600, a core network (core network, CN) 630, and an Internet 640. The RAN 600 includes at least one RAN node (for example, a node 610a and a node 610b in FIG. 6, which are collectively referred to as 610) and at least one terminal (for example, 620a to 620j in FIG. 6, which are collectively referred to as 620). The RAN 600 may further include other RAN nodes, for example, a wireless relay device and/or a wireless backhaul device (not shown in FIG. 6). For example, "node" may also be referred to as "network element". For example, the node 610a and the node 610b may also be referred to as a network element 610a and a network element 610b, and the node 620a to the node 620j may also be referred to as a network element 620a to a network element 620j.

The terminal 620 is connected to the RAN node 610 in a wireless or wired manner. Different terminals are communicatively connected to each other in a wireless or wired manner. The RAN node 610 is connected to the core network 630 in a wireless or wired manner. A core network device in the core network 630 and the RAN node 610 in the RAN 600 may be different physical devices, or a function of a core network device and a logical function of the RAN node 610 may be integrated into the same physical device, or some functions of the core network device and some functions of the RAN node 610 may be integrated into one physical device.

The RAN 600 may be a cellular system related to a 3rd generation partnership project (3rd generation partnership project, 3GPP), for example, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 4G mobile communication system, a 5G mobile communication system (including standalone networking and non-standalone networking), new radio (New Radio, NR), a future-oriented evolved system (for example, a 6G mobile communication system), or a cloud radio access network (cloud radio access network, CRAN), or may be an open access network (open RAN, O-RAN, or ORAN) system, or may be a communication system integrating two or more of the foregoing systems. This is not limited herein in this embodiment of this application.

The RAN node 610 may also be referred to as an access network device, a radio access network device, a network device, a RAN entity, an access node, or the like sometimes, and forms a part of the communication system, to help a terminal implement radio access. A plurality of RAN nodes 610 in the communication system 60 may be nodes of the same type, or may be nodes of different types. In some scenarios, roles of the RAN node 610 and the terminal 620 are relative to each other. For example, the network element 620i in FIG. 6 may be a helicopter or an uncrewed aerial vehicle, and may be configured as a mobile base station. For the terminal 620j that accesses the RAN 600 via the network element 620i, the network element 620i is a base station. However, for the base station 610a, the network element 620i is a terminal. That is, the base station 610a communicates with the terminal 620i by using a radio air interface protocol. Certainly, the base station 610a and the network element 620i may alternatively communicate with each other by using an interface protocol between base stations. In this case, for 610a, the network element 620i is also a base station. The RAN node 610 and the terminal 620 are both referred to as communication apparatuses sometimes. For example, the network elements 610a and 610b in FIG. 6 may be understood as communication apparatuses having a base station function, and the network elements 620a to 620j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, or the like. The RAN node may be a macro base station (for example, 610a in FIG. 6), a micro base station or an indoor station (for example, 610b in FIG. 6), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in the same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of a software module and a hardware module.

For example, in the example shown in FIG. 6, the information transmission method provided in this application may be used between the terminal and the network element 610a, between the network element 610a and the network element 610b, and between the terminal and the network element 610b in a process of transmitting a changed sending configuration of an SSB.

For example, the RAN node and the terminal may be at fixed positions, or may be movable. The RAN node and the terminal may be deployed on land, including indoors or outdoors, hand-held or vehicle-mounted; may be deployed on water; or may be deployed on an airplane, a balloon, or an artificial satellite. Application scenarios of the RAN node and the terminal are not limited in embodiments of this application.

For example, in embodiments of this application, communication between a RAN node and a terminal, between different RAN nodes (for example, the network element 610a and the network element 610b), and between terminals may be performed by using a licensed spectrum, or may be performed by using an unlicensed spectrum, or may be performed by using both a licensed spectrum and an unlicensed spectrum. In addition, communication may be performed by using a spectrum below 6 gigahertz (gigahertz, GHz), or communication may be performed by using a spectrum above 6 GHz, or communication may be performed by using both a spectrum below 6 GHz and a spectrum above 6 GHz. A spectrum resource used for wireless communication is not limited in embodiments of this application.

In embodiments of this application, a function of the RAN node may alternatively be performed by a module (for example, a chip) in the RAN node, or may be performed by a control subsystem including the function of the RAN node. For example, the control subsystem including the function of the RAN node may be a control center in application scenarios such as smart grid, industrial control, smart transportation, and smart city. A function of the terminal may alternatively be performed by a module (for example, a chip or a modem) in the terminal, or may be performed by an apparatus including the function of the terminal.

In embodiments of this application, the terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

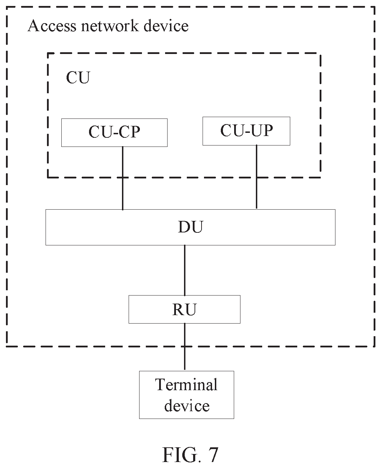

For example, FIG. 7 is a diagram of an example of a radio access network RAN. As shown in FIG. 7, the radio access network includes an access network device and a terminal device. The access network device includes one or more CUs, one or more DUs, and one or more radio units (radio unit, RU). For clarity, FIG. 7 shows only one CU, one DU, and one RU. The CU is configured to be connected to a core network and one or more DUs. Optionally, the CU may have some functions of the core network. The CU may include a CU-CP and a CU-UP.

The CU and the DU may be configured based on protocol layer functions of a wireless network that are implemented by the CU and the DU. For example, the CU is configured to implement functions of a packet data convergence protocol (packet data convergence protocol, PDCP) layer and higher protocol layers (for example, a radio resource control (radio resource control, RRC) layer and/or a service data adaptation protocol (service data adaptation protocol, SDAP) layer). The DU is configured to implement functions of protocol layers (for example, a radio link control (radio link control, RLC) layer, a medium access control (media access control, MAC) layer, and/or a physical (physical, PHY) layer) lower than the PDCP layer. For another example, the CU is configured to implement functions of a protocol layer above a PDCP layer (for example, an RRC layer and/or an SDAP layer), and the DU is configured to implement functions of the PDCP layer and a lower protocol layer (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element configured to implement a control plane function in the core network. The network element configured to implement the control plane function in the core network may be an access and mobility function network element, for example, an access and mobility function (access and mobility management function, AMF) in a 5G system. The access and mobility function network element is configured to be responsible for mobility management in a mobile network, for example, position updating of a terminal device, network registration of the terminal device, and switching of the terminal device.

The CU-UP may interact with a network element configured to implement a user plane function in the core network. The network element that is in the core network and that is configured to implement the user plane function, for example, a user plane function (user plane function, UPF) in the 5G system, is configured to be responsible for forwarding and receiving data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have some processing functions of protocol layers. For example, some functions of the RLC layer and functions of protocol layers above the RLC layer are set in the CU, and remaining functions of the RLC layer and functions of protocol layers below the RLC layer are set in the DU. For another example, functions of the CU or the DU may be divided based on a service type or another system requirement, for example, based on a delay. A function whose processing time needs to satisfy a low delay requirement is set on the DU, and a function whose processing time does not need to satisfy the delay requirement is set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement intermediate frequency and radio frequency functions. For another example, the DU is configured to implement a higher layer function of the PHY layer, and the RU is configured to implement a lower layer function of the PHY layer or implement the lower layer function and a radio frequency function. The higher-layer function of the physical layer may include some functions of the physical layer, and these functions are closer to the MAC layer. The lower-layer function of the physical layer may include some other functions of the physical layer, and these functions are closer to an intermediate frequency and radio frequency side.

It should be understood that, in embodiments of this application, "RAN node" may alternatively have different expressions. For example, "RAN node" may also be referred to as a network device, an access network device, or a radio access network device. Unless otherwise specified, "network device" is used for expression in this application. The network device is an original expression of an access network device (for example, a base station).

It should be understood that the communication system shown in FIG. 6 is merely an example, and should not constitute any limitation on the communication system applicable to embodiments of this application. For example, the communication system shown in FIG. 6 may further include more or fewer network nodes, for example, terminal devices or RAN nodes. The RAN nodes or the terminal devices included in the communication system shown in FIG. 6 may be RAN nodes or terminal devices in the foregoing various forms. Details are not shown one by one in the figure in embodiments of this application.

The following describes the information transmission method provided in this application with reference to a specific example.

It should be understood that in embodiments of this application, the method is described by using an example in which the method is performed by a terminal device and a network device. As an example rather than a limitation, the terminal device in this application may alternatively be a chip, a chip system, a processor, or the like that supports the terminal device in implementing the method. The network device in this application may alternatively be a chip, a chip system, or a processor that supports the network device in implementing the method, or may be a logical node, a logical module, software, or the like that can implement all or some functions of the network device. This is not limited herein in embodiments of this application.

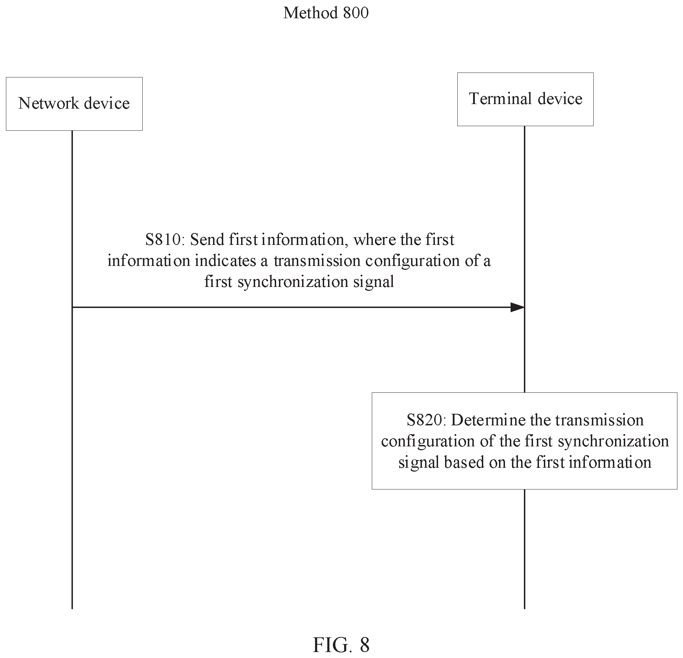

The following describes in detail the method provided in this application with reference to FIG. 8. FIG. 8 is a schematic flowchart of an information transmission method according to an embodiment of this application. The method 800 may be applied to a scenario or a communication architecture shown in FIG. 6, or certainly may be applied to another communication scenario or communication architecture. This is not limited in this embodiment of this application.

As shown in FIG. 8, the method 800 shown in FIG. 8 may include S810 and S820. The following describes steps in the method 800 in detail with reference to FIG. 8.

S810: A network device sends first information to a terminal device, where the first information indicates a transmission configuration of a first synchronization signal.

Correspondingly, the terminal device receives the first information.

It should be understood that, in this embodiment of this application, the first synchronization signal may include an initial synchronization signal or a synchronization signal in another process, provided that the first synchronization signal may be used for synchronization (for example, initial synchronization) between the terminal device and the network device. In this embodiment of this application, a specific synchronization signal that is the first synchronization signal or a name of the synchronization signal is not limited. For ease of description, in the following example, an example in which "first SSB" is used as "first synchronization signal" is used for description. However, it should be understood that in another implementation of this application, the synchronization signal may alternatively be another initial synchronization signal, or the SSB may be expressed as another name. This is not limited in this embodiment of this application.

Optionally, "the first information indicates a transmission configuration of the first SSB" may be replaced with "the first information includes the transmission configuration of the first SSB". In other words, it only needs to be ensured that the terminal device may determine the transmission configuration of the first SSB based on the first information. The transmission configuration of the first SSB may be included in the first information, or the transmission configuration of the first SSB may not be included in the first information. For example, the transmission configuration of the first SSB is included in some signaling indicated by the first information, or is determined based on an indication of the first information. In other words, the first information indicates a status of the transmission configuration of the first SSB. This is not limited herein in this embodiment of this application.

It should be understood that, in this embodiment of this application, the first information is different from RRC signaling or system information (for example, an SIB 1). In other words, the first information is not RRC signaling or an SIB 1. For example, the first information may be DCI (for example, may be new DCI), a sequence, or transmission information carried on a PBCH channel.

Optionally, the transmission configuration of the first SSB may also be referred to as configuration information of the first SSB or a sending configuration of the first SSB.

For example, the transmission configuration of the first SSB may include:
at least one of the following: a sending periodicity of the first SSB, a sending offset of the first SSB, or an actual transmission status of the first SSB on a transmission occasion corresponding to the first SSB.

For example, the sending periodicity of the first SSB may be the same as content indicated by a field "ssb-PeriodicityServingCell". The actual transmission status on the transmission occasion corresponding to the first SSB (the actual transmission status of the first SSB on the transmission occasion corresponding to the first SSB) may be the same as content indicated by a field "ssb-PositionsInBurst". The sending offset of the first SSB may be understood as an offset (offset) of a sending time (or a moment, an occasion, or the like) of the first SSB in time domain relative to a predefined or configured time (or a moment, an occasion, or the like). An actual sending occasion of the first SSB (namely, a time domain resource position occupied by the first SSB) may be determined based on the sending offset of the first SSB and the sending periodicity of the first SSB. For example, the predefined or configured occasion may be any sending occasion or sending moment defined by an SSB pattern (SSB pattern). For another example, the predefined occasion may be a predefined transmission pattern, for example, a case A (Case A) or a case B (Case B) defined by an SSB pattern (SSB pattern) in a protocol, or a newly defined case X (Case X). The predefined occasion or moment is not limited in this embodiment of this application.

Certainly, in another implementation of this application, the transmission configuration of the first SSB may further include other content. For example, the transmission configuration of the first SSB may further include a frequency domain position of the first SSB. This is not limited in this embodiment of this application.

It should be understood that, in this embodiment of this application, the terminal device may be any type of terminal device. For example, the terminal device may be a terminal device in an RRC connected state (RRC_CONNECTED), a terminal device in an RRC inactive state (RRC_INACTIVE), or a terminal device in an RRC idle state (RRC_IDLE).

It should be further understood that, the transmission configuration of the first SSB may be a transmission configuration of the first SSB after the transmission configuration of the first SSB changes. In other words, the transmission configuration of the first SSB may be an updated transmission configuration of the first SSB. Alternatively, the transmission configuration of the first SSB may be an initial sending configuration of the first SSB (for example, a transmission configuration of the first SSB before a change).

S820: The terminal device determines the transmission configuration of the first synchronization signal based on the first information.

For example, the terminal device may determine at least one of the following: the sending periodicity of the first SSB, the sending offset of the first SSB, or the actual transmission status on the transmission occasion corresponding to the first SSB based on the first information. After the transmission configuration of the first SSB is determined, the first SSB may be correctly received.

According to the information transmission method provided in this application, the network device may notify the terminal device of the transmission configuration of the first SSB by using the first information. For example, the transmission configuration of the first SSB may be an updated or changed transmission configuration of the first SSB, or the transmission configuration of the first SSB may be an initial transmission configuration of the first SSB (for example, a changed transmission configuration of the first SSB). Terminal devices in various states may all receive the first information, to obtain a transmission configuration change status of the first SSB based on the first information. In this way, the terminal devices in various states can correctly receive the first SSB, thereby ensuring normal running of communication. Compared with an SI updating procedure, in this way, only a first message is required, which requires fewer communication resources and a shorter procedure time, thereby reducing overhead of communication resources and notification delay, and increasing the efficiency and speed of obtaining a sending configuration of an SSB by the terminal device.

Optionally, the first SSB may be an SSB defined in a current protocol. Certainly, if there are SSBs with a plurality of configurations, the first SSB may be an SSB with any configuration. For example, the first SSB may be a short-periodicity SSB or a long-periodicity SSB. This is not limited in this embodiment of this application.

Optionally, in some possible implementations, the first information may be carried in any one of paging DCI, paging information (the paging information may also be referred to as a paging message), or paging early indication DCI (namely, PEI DCI). In other words, the network device may send the paging DCI, the paging information, or the PEI DCI to the terminal device. The first information is carried in the paging DCI, or the first information is carried in the paging information, or the first information is carried in the PEI DCI. The terminal device may obtain the first information by detecting the paging DCI, the paging information, or the PEI DCI. The paging DCI, the paging information, or the paging early indication DCI may be understood as a transmission occasion of the first information. The transmission occasion of the first information (a time domain resource position that may be used to transmit the first information or a candidate time domain resource position that may be used to transmit the first information) may include one or more transmission occasions, and the network device may send the first information to the terminal device on the transmission occasion of the first information. The terminal device may separately detect the first information on the transmission occasion of the first information. It may be understood that a transmission occasion occupied by first information actually sent by the network device may be a part or all of the transmission occasion of the first information. Optionally, the transmission occasion of the first information may also be referred to as a sending occasion or a receiving occasion of the first information.

Optionally, in this embodiment of this application, the paging message may also be referred to as "Paging PDSCH".

In the foregoing manner, existing signaling is reused for transmission of the first information, and there is no need to additionally use new signaling to transmit the first information, thereby reducing complexity of detecting the first information by the terminal device. In addition, the terminal devices in various states may all receive the first information, so that the terminal devices in various states may correctly receive the first SSB, thereby ensuring normal running of communication. A procedure consumes a short time period, thereby reducing overhead of communication resources and notification delay.

In some possible implementations of this application, after the terminal device receives the first information, the first information may not take effect immediately. Therefore, an effective time (or may be referred to as an effective moment) of the first information may be predefined or configured. The effective moment of the first information may be understood as a transmission configuration effective moment, of the SSB, included or indicated in the first information. The network device sends, starting from the effective moment of the first information, the first SSB to the terminal device based on a transmission configuration (a beam used to send an SSB and/or a sending periodicity of the SSB), of the first SSB, included or indicated in the first information. The terminal device receives the first SSB based on the transmission configuration of the first SSB (for example, the sending periodicity of the first SSB and a transmit beam of the first SSB) in the first information.

Optionally, in a possible implementation, if the first information is carried in the paging DCI, the paging information, or the PEI DCI, the effective time of the first information may be as follows: The first information takes effect at an end of a paging periodicity corresponding to the terminal device receiving the paging DCI, the paging information, or the PEI DCI carrying the first information (or a paging periodicity in which the PEI DCI is located).

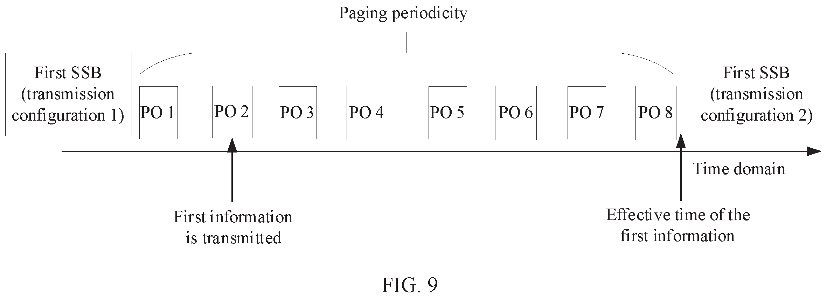

For example, FIG. 9 is a diagram of an example of a sending occasion and an effective moment of first information. As shown in FIG. 9, before the first information is sent, the transmission configuration of the first SSB is a transmission configuration 1. In other words, the first SSB is sent based on the transmission configuration 1. Then, the transmission configuration of the first SSB changes, and changes to a transmission configuration 2. In other words, the first SSB is sent based on the transmission configuration 2. For example, the transmit beam of the first SSB changes. In this case, the first information includes the transmission configuration 2 of the first SSB. The first information is carried in the paging DCI. The terminal device may detect the paging DCI on a PO corresponding to the terminal device. The PO corresponds to a first paging periodicity in the paging periodicity. The first paging periodicity includes a plurality of POs (a PO 1 to a PO 8). The network device may separately send the first information on a plurality of POs in the PO 1 to the PO 8, and each terminal device detects the paging DCI on a PO corresponding to the terminal device. If the network device transmits the first information on a PO 2, a terminal device corresponding to the PO 2 may detect the first information on the PO 2. The first information takes effect at the end of the paging periodicity.

Certainly, the network device also needs to send, starting from the effective moment or the effective time of the first information, the first SSB to the terminal device based on the transmission configuration (namely, the transmission configuration 2), of the first SSB, included or indicated in the first information.

Optionally, in another possible implementation, if the first information is carried in the paging DCI, the paging information, or the PEI DCI, the effective time of the first information may be as follows: The first information takes effect after an end (or at an end) of a configuration periodicity corresponding to the terminal device receiving the paging DCI, the paging information, or the PEI DCI. The configuration periodicity may be understood as a length of a time interval between a moment at which the terminal device receives the paging DCI, the paging information, or the PEI DCI (or a moment at which the terminal device receives the first information) and an effective moment of the first message carried in the paging DCI, the paging information, or the PEI DCI.

Optionally, the configuration periodicity may be an integer multiple of the paging periodicity corresponding to the paging DCI, the paging information, or the PEI DCI, for example, 2 times, 4 times, 8 times, or 16 times the paging periodicity. A time length of the configuration periodicity is not limited in this embodiment of this application.

It should be understood that if the effective time of the first information is as follows: The first information takes effect at the end of the configuration periodicity corresponding to the terminal device receiving the paging DCI, the paging information, or the PEI DCI, because the configuration periodicity is a time length, a start time (start moment) of the time length may be a start time (start moment) of a paging periodicity corresponding to paging DCI, paging information, or PEI DCI that actually carries the first information; or an absolute time defined by a system (for example, a time at which a system frame number is 0); or may be a sending time (sending moment) of paging DCI, paging information, or PEI DCI that actually carries the first information.

Optionally, the configuration periodicity may also be referred to as an effective time length, an effective periodicity, or the like. This is not limited herein in this embodiment of this application.

For example, if the first information is carried in the paging DCI, the effective time of the first information may be as follows: The first information takes effect after an end (or at an end) of a configuration periodicity corresponding to the terminal device receiving the paging DCI that carries the first information.

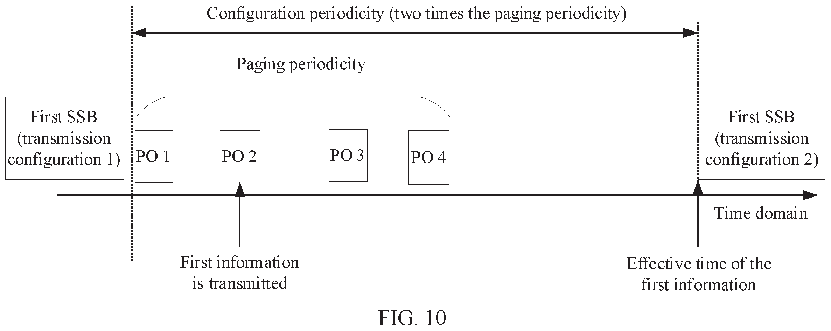

For example, FIG. 10 is a diagram of another example of a sending occasion and an effective moment of first information. As shown in FIG. 10, before the first information is sent, the transmission configuration of the first SSB is a transmission configuration 1. In other words, the first SSB is sent based on the transmission configuration 1. Then, the transmission configuration of the first SSB changes, and changes to a transmission configuration 2. In other words, the first SSB is sent based on the transmission configuration 2. For example, the transmit beam of the first SSB changes. In this case, the first information includes the transmission configuration 2 of the first SSB. The first information is carried in the paging DCI. The terminal device may detect or receive the paging DCI on a PO corresponding to the terminal device. The PO corresponds to a plurality of POs (a PO 1 to a PO 4) included in a paging periodicity (namely, a paging periodicity corresponding to the paging DCI). The network device may separately send the first information on a plurality of POs in the PO 1 to the PO 4, and each terminal device detects the paging DCI on a PO corresponding to the terminal device. If the network device transmits the first information on a PO 2, a terminal device corresponding to the PO 2 may detect the first information on the PO 2. If a configuration periodicity corresponding to the PO 2 (namely, the paging DCI that carries the first information) is two times the paging periodicity, the first information takes effect at an end of a time length, that is two times the paging periodicity, starting from a start moment of the paging periodicity.

Optionally, the effective time, the configuration periodicity, and the like of the first information may be predefined, or may be indicated by the network device to the terminal device by using signaling (for example, by using the first message); or the effective time, the configuration periodicity, and the like of the first information may be preconfigured (or configured). This is not limited herein in this embodiment of this application.

It should be understood that, in this embodiment of this application, "predefined" content may be understood as information that is defined in a standard, that does not need to be configured by another device, and that is recorded/written in advance in hardware and/or software of the terminal device, or may be understood as information that cannot be changed by the network device or another terminal device. "Preconfigured" content may be understood as information that is recorded/written in advance in hardware and/or software of the terminal device, that is determined by a device manufacturer, and that may be changed by using software or hardware. For example, "(pre)configuring" may be performing (pre)configuring by the network device, for example, may be performing (pre)configuring based on system information SI.

The effective time of the first information is predefined, preconfigured, or indicated to the terminal device, to ensure that the terminal device and the network device have a consistent understanding of the effective time of the first information, and the terminal device and the network device may perform alignment in terms of when the transmission configuration of the first SSB changes, thereby ensuring reliability and efficiency of transmission of the first information, and further ensuring transmission reliability of the first SSB.

Optionally, in some possible implementations of this application, a plurality of terminal devices (for example, all terminal devices in a cell) may detect the first information on the same transmission occasion (one or more transmission occasions). In other words, transmission occasions, of the first information, corresponding to the plurality of terminal devices (for example, all the terminal devices in the cell) may be the same. In other words, a PO that carries the first information may be a PO corresponding to all of the plurality of terminal devices, or a PEI-O that carries the first information may be a PEI-O corresponding to all of the plurality of terminal devices, or paging information that carries the first information may be paging information corresponding to all of the plurality of terminal devices. In other words, a transmission occasion of the first information is a first transmission occasion, and the first transmission occasion is a transmission occasion of paging DCI corresponding to a terminal device with an ID (UE_ID) being a first ID, or a transmission occasion of paging early indication DCI corresponding to a first ID. For example, the first ID may be that UE_ID is 0. In this case, the plurality of terminal devices (for example, all the terminal devices in the cell) may detect the first information on the same transmission occasion (one or more transmission occasions). In other words, the plurality of terminal devices (for example, all the terminal devices in the cell) all correspond to the first ID. In other words, the plurality of terminal devices correspond to the same ID (the first ID). For example, the first ID may be UE_ID (for example, UE_ID is 0) corresponding to all of the plurality of terminal devices. For example, the first ID (for example, UE_ID=0) may be a value predefined in a protocol, or a value uniformly configured by the base station for all the terminal devices (for example, the network device configures the first ID for the terminal device based on system information).

It should be understood that, unless otherwise specified, "all the terminal devices" in the following descriptions are all the terminal devices in the cell.

For example, if the first information is carried in the paging DCI, for the plurality of terminal devices (for example, all the terminal devices in the cell), the network device may transmit the first information on a transmission occasion (PO) of specific paging DCI. In other words, the plurality of terminal devices may detect the first information on the same PO (for example, one PO or a plurality of POs). For example, a protocol may predefine one first ID, or the network device may uniformly configure one first ID. The first ID may be UE_ID. For example, UE_ID=0. The first ID corresponds to one PO (for example, the first PO). All the terminal devices detect a PDCCH on the first PO. In other words, all the terminal devices detect the first information on the first PO.

For another example, if the first information is carried in the PEI DCI, for the plurality of terminal devices (for example, all the terminal devices in the cell), the network device may transmit the first information on a transmission occasion (PEI-O) of the same PEI DCI. In other words, the plurality of terminal devices (for example, all the terminal devices in the cell) may detect the first information on the same PEI-O (for example, one or more PEI-Os). For example, a protocol may predefine one first ID, or the network device may uniformly configure one first ID. The first ID may be UE_ID. For example, UE_ID=0. The first ID corresponds to one PEI-O (for example, a first PEI-O). All the terminal devices detect a PDCCH on the first PEI-O. In other words, all the terminal devices detect the first information on the first PEI-O.

For another example, if the first information is carried in the paging information, for the plurality of terminal devices (for example, all the terminal devices in the cell), the network device may transmit the first information on a transmission occasion (for example, a PDSCH) of the same paging information. In other words, the plurality of terminal devices (for example, all the terminal devices in the cell) may detect the first information on the same PDSCH (for example, one or more PDSCHs). For example, a protocol may predefine one first ID, or the network device may uniformly configure one first ID, the first ID corresponds to one PDSCH, and all the terminal devices detect the first information on the first PDSCH.

Optionally, in a possible implementation, when all the terminal devices correspond to the same transmission occasion of the first information, the effective time of the first information may be as follows: The first information takes effect at an X^{th} time unit after the transmission occasion (for example, a PO, a PEI-O, or a PDSCH) corresponding to the first information; or the first information takes effect at an end of a preset time length starting from the transmission occasion corresponding to the first information. For example, the X time units may be X frames, X subframes, X slots, X time domain symbols (for example, OFDM symbols), X milliseconds (ms), or X seconds (s). A granularity of the X time units is not limited in this application. The preset time length may be X frames, X subframes, X slots, X time domain symbols, X milliseconds (ms), X seconds (s), or the like. A value of X may be a positive integer.

It should be understood that the transmission occasion (for example, one or more transmission occasions) of the first information may be notified by the network device to the plurality of terminal devices (for example, all the terminal devices) through signaling; or the transmission occasion of the first information may be one or more predefined or preconfigured common transmission occasions. The plurality of terminal devices may detect the first information on the same transmission occasion.

In the foregoing manner, the plurality of terminal devices (for example, all the terminal devices) detect the first information on the same PEI-O, the same PO, or the same PDSCH. In other words, the plurality of terminal devices detect the same transmission occasion. The network device does not need to separately send the first information to each terminal device, thereby reducing the amount of first information to be sent by the network device (for example, the first information needs to be sent only one time), and reducing overheads and power consumption of sending the first message by the network device. In addition, an effective time of the first message may be earlier, thereby improving reliability and efficiency of the first information.

Optionally, the effective time of the first information, the preset time length, the X time units, or the like may be predefined, or may be indicated by the network device to the terminal device by using signaling (for example, by using the first message); or the effective time, the configuration periodicity, and the like of the first information may be preconfigured (or configured). This is not limited herein in this embodiment of this application.

Optionally, if the first information is carried in the paging DCI, and in a scenario in which the plurality of terminal devices (for example, all the terminal devices) detect the first information on the same PO, the effective time of the first information may be as follows: The first information takes effect at the end of the paging periodicity corresponding to the paging DCI that carries the first information (or a paging periodicity in which the paging DCI is located); or the effective time of the first information may be as follows: The first information takes effect after the end (or at the end) of the configuration periodicity corresponding to the paging DCI received by the terminal device.

Optionally, if the first information is carried in the PEI DCI, and in a scenario in which the plurality of terminal devices (for example, all the terminal devices) detect the first information on the same PEI-O, the effective time of the first information may be as follows: The first information takes effect at the end of the paging periodicity corresponding to the PEI DCI that carries the first information (or a paging periodicity in which the PEI DCI is located); or the effective time of the first information may be as follows: The first information takes effect after the end (or at the end) of the configuration periodicity corresponding to the PEI DCI received by the terminal device.

Optionally, if the first information is carried in the paging information, and in a scenario in which the plurality of terminal devices (for example, all the terminal devices) detect the first information on same paging information, the effective time of the first information may be as follows: The first information takes effect at the end of the paging periodicity corresponding to the paging information that carries the first information; or the effective time of the first information may be as follows: The first information takes effect after the end (or at the end) of the configuration periodicity corresponding to the paging information received by the terminal device.

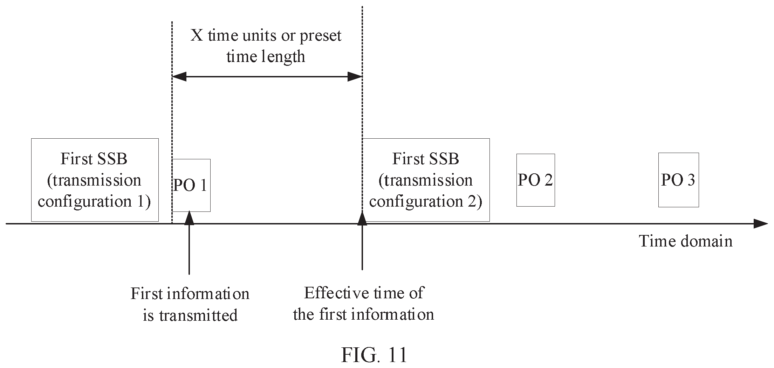

For example, FIG. 11 is a diagram of an example in which a plurality of terminal devices (for example, all terminal devices) detect first information on a PO 1. For example, the PO 1 may be a PO corresponding to a terminal device (for example, a terminal device whose UE_ID is 1). Before the first information is sent, the transmission configuration of the first SSB is a transmission configuration 1. Then, the transmission configuration of the first SSB changes, and changes to a transmission configuration 2. In other words, the first SSB is sent based on the transmission configuration 2. For example, the transmit beam of the first SSB changes. In this case, the first information includes the transmission configuration 2 of the first SSB. The first information takes effect at an X^{th} time unit after the PO 1 or at an end of a preset time length.

Optionally, in some possible implementations of this application, a first value (for example, "00") of a short message indicator (Short Message indicator) field in the paging DCI may indicate that the paging DCI includes the first information. For example, the first information may be carried in a new field or a new bit field (for example, a first field) in the paging DCI. In this manner, there is no need to use an additional field in the paging DCI to indicate that the paging DCI includes the first information. Therefore, overheads of the paging DCI are not increased, and utilization of communication resources is improved.

Optionally, in some possible implementations of this application, a first value (for example, "00") of a short message indicator (Short Message indicator) field in the paging DCI may indicate that the paging message includes the first information. For example, the first information is carried in the paging message. In this manner, there is no need to use an additional field in the paging DCI to indicate that the paging message includes the first information. Overheads of the paging DCI are not increased, and utilization of communication resources is improved.

Optionally, in some possible implementations of this application, a short message (Short Message) field in the paging DCI carries the first information. For example, a bit 5 to a bit 8 of the short message field in the paging DCI carry the first information. In this manner, there is no need to use an additional resource in the paging DCI to carry the first information. Therefore, overheads of the paging DCI are not increased, and utilization of communication resources is improved.

Optionally, in some possible implementations of this application, a short message (Short Message) field in the paging DCI may indicate that the paging DCI includes the first information. For example, the first information may be carried in a new field or a new bit field (for example, a first field) in the paging DCI.

Optionally, in some possible implementations of this application, a short message (Short Message) field in the paging DCI may indicate that the paging message includes the first information. Correspondingly, the first information is carried in the paging message.

Optionally, in some possible implementations of this application, a new field or a new bit field (for example, a first field) in the paging DCI may alternatively be used to carry the first information.

Optionally, in some possible implementations of this application, a new field or a new bit field in the PEI DCI may alternatively be used to carry the first information.

Optionally, in some possible implementations of this application, a transmission occasion of the first information may alternatively be the same as a transmission occasion of the paging DCI or the PEI DCI. However, the first information is carried in new DCI or new signaling. In other words, the paging DCI or the PEI DCI does not include the first information. The transmission occasion may be a monitoring occasion of control information, namely, a PDCCH MO, a monitoring occasion of the paging DCI is a PO, and a monitoring occasion of the PEI DCI is a PEI-O. For example, the terminal device may detect the paging DCI and new DCI (for example, first DCI) on the transmission occasion (namely, the PO) of the paging DCI. The new DCI includes the first information. Alternatively, the terminal device may detect the PEI DCI and new DCI on the transmission occasion (namely, the PEI-O) of the PEI DCI. The new DCI includes the first information. An existing PDCCH MO (namely, a PDCCH MO corresponding to the PO or the PEI-O) is reused, which introduces no new configuration, and can reduce complexity of detecting a PDCCH by the terminal device.

For the foregoing case, the effective time of the first information may be as follows: The first information takes effect after the end (or at the end) of the configuration periodicity corresponding to the terminal device receiving the paging DCI or the PEI DCI corresponding to the first information (that is, receiving the first information on a transmission occasion of specific paging DCI or PEI DCI); or the first information takes effect at the end of the paging periodicity corresponding to the terminal device receiving the paging DCI or the PEI DCI corresponding to the first information (that is, receiving the first information on a transmission occasion of specific paging DCI or PEI DCI); or the effective time of the first information may be the X^{th} time unit after the transmission occasion (for example, the PO or the PEI-O) corresponding to the first information, or the first information takes effect at the end of the preset time length starting from the transmission occasion corresponding to the first information.

For example, that the transmission occasion of the first information is the same as the transmission occasion of the paging DCI may include: The transmission occasion of the first information is the transmission occasion of the complete paging DCI; or the transmission occasion of the first information is a transmission occasion of specific paging DCI, for example, the transmission occasion (namely, the PO) of the paging DCI corresponding to UE_ID of the terminal device (or the terminal device). That the transmission occasion of the first information is the same as the transmission occasion of the PEI DCI may include: The transmission occasion of the first information is the transmission occasion of the complete PEI DCI; or the transmission occasion of the first information is a transmission occasion of specific PEI DCI, for example, the transmission occasion (namely, the PEI-O) of the PEI DCI corresponding to UE_ID of the terminal device (or the terminal device).

For example, that the transmission occasion of the first information is the same as the transmission occasion of the paging DCI or the PEI DCI may include: The terminal device may receive the first DCI on any PO or PEI-O in one DRX cycle; or the terminal device may receive the first DCI on a PO or PEI-O corresponding to UE_ID of the terminal device.

Optionally, in some other possible implementations, the first information may alternatively be new signaling or new information. In other words, the first information may alternatively not be carried in existing signaling (for example, the paging DCI, the paging information, or the PEI DCI). In this case, because the first information includes or indicates the transmission configuration of the first SSB, the transmission occasion (namely, the time domain resource position or the candidate time domain resource position that may be occupied by the first information) of the first information may be before the transmission occasion of the first SSB. It may be understood that, because the transmission occasion of the first SSB is periodic, "transmission occasion of the first SSB" may be a transmission occasion of any first SSB or a transmission occasion of each first SSB. For example, a start moment of the transmission occasion of the first information may be an M^{th} time unit before the transmission occasion of the first SSB (or the transmission occasion of each first SSB); or a start moment of the transmission occasion of the first information may be before the transmission occasion of the first SSB (or the transmission occasion of each first SSB) and separated from the transmission occasion of the first SSB by a preset time length (that is, the start moment of the transmission occasion of the first information may be before the transmission occasion of each first SSB and separated from a start sending moment of the first SSB by a time interval of a preset time length).

Optionally, the start moment of the transmission occasion of the first information may also be referred to as a start time domain unit corresponding to the transmission occasion of the first information.

For example, the M time units may be M frames, M subframes, M slots, M time domain symbols (for example, OFDM symbols), M milliseconds (ms), or M seconds (s). A granularity of the M time units is not limited in this application. The preset time length may be M frames, M subframes, M slots, M time domain symbols, M milliseconds (ms), M seconds (s), or the like. A value of M may be a positive integer.

Optionally, the effective time of the first information may be as follows: The first information takes effect at an N^{th} time unit after a corresponding transmission occasion (namely, a transmission occasion on which the first information is actually transmitted or a transmission occasion on which the first information is located and that is detected by the terminal device) ends; or the effective time of the first information may be as follows: The first information takes effect at an end of a preset time length after a corresponding transmission occasion ends; or the effective time of the first information may be as follows: The first information takes effect at a start sending moment of a next first SSB after the first information.

For example, a value of N may be the same as a value of M. In other words, the effective time of the first information is as follows: The first information takes effect at the start sending moment of the next first SSB after the first information. Alternatively, a value of N may be less than a value of M. In other words, the effective time of the first information is as follows: The first information takes effect before the start sending moment of the next first SSB after the first information. Alternatively, a value of N may be greater than a value of M. In this case, because the first SSB is periodically sent, the effective time of the first information may be as follows: The first information takes effect after at an end of a transmission occasion of a next first SSB after the first information.

It should be understood that, because SSBs that need to be detected or received by a plurality of terminal devices (for example, all terminal devices in a cell) are the same, for example, are all first SSBs, the transmission occasion of the first information is a transmission occasion or a monitoring occasion corresponding to all of the plurality of terminal devices. In other words, transmission occasions, of the first information, corresponding to the plurality of terminal devices are the same. The plurality of terminal devices may detect the first information on the same transmission occasion (one or more transmission occasions).

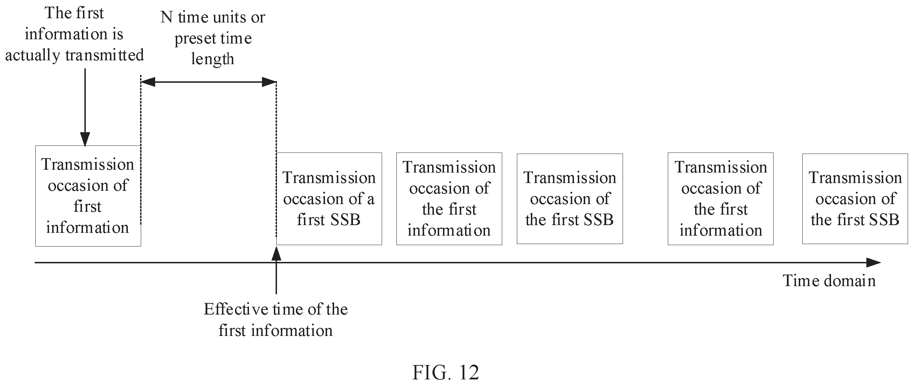

For example, FIG. 12 is a diagram of a transmission occasion and an effective time of first information. As shown in FIG. 12, the first information may correspond to a plurality of transmission occasions. In other words, the first information may be sent on any one of the plurality of transmission occasions. A start moment of the transmission occasion of the first information may be an M^{th} time unit before the transmission occasion of the first SSB; or a start moment of the transmission occasion of the first information may be before the transmission occasion of the first SSB and separated from the transmission occasion of the first SSB by a preset time length. The first information takes effect at an N^{th} time unit after a corresponding transmission occasion (namely, a transmission occasion on which the first information is actually transmitted or a transmission occasion on which the first information is located and that is detected by the terminal device); or the first information takes effect at an end of a preset time length after a corresponding transmission occasion ends.

It should be understood that the transmission occasion (one or more transmission occasions) of the first information may be notified by the network device to the plurality of terminal devices (for example, all the terminal devices) through signaling; or the transmission occasion of the first information may be one or more predefined or preconfigured common transmission occasions. The plurality of terminal devices may detect the first information on the same transmission occasion.

In the foregoing manner, the plurality of terminal devices (for example, all the terminal devices) detect the first information on the same transmission occasion. In other words, the plurality of terminal devices detect the same transmission occasion. The network device does not need to separately send the first information to each terminal device, thereby reducing the amount of first information to be sent by the network device, and reducing overheads and power consumption of sending the first message by the network device. Before the transmission occasion of the first SSB, the terminal device may obtain the transmission configuration of the first SSB in a timely manner, to ensure that the terminal device can correctly receive the first SSB. In addition, an effective time of the first message may be earlier, thereby improving reliability of the first information.

Optionally, in some other possible implementations, if the transmission configuration of the first SSB changes, and the first information includes or indicates an updated (changed) transmission configuration of the first SSB, the start moment of the transmission occasion of the first information may be a T^{th} time unit before the transmission occasion of the first SSB (or a transmission occasion of each first SSB); or the start moment of the transmission occasion of the first information may be before the transmission occasion of the first SSB (or a transmission occasion of each first SSB) and separated from the transmission occasion of the first SSB by a preset time length (that is, the start moment of the transmission occasion of the first information may be before the transmission occasion of each first SSB and separated from the start sending moment of the first SSB by a time interval of a preset time length). Optionally, the transmission occasion of the first SSB may be a transmission occasion of the first SSB after the transmission configuration is updated.

Optionally, the effective time of the first information may be as follows: The first information takes effect at an S^{th} time unit after a corresponding transmission occasion (namely, a transmission occasion on which the first information is actually transmitted or a transmission occasion on which the first information is located and that is detected by the terminal device); or the effective time of the first information may be as follows: The first information takes effect at an end of a preset time length after a corresponding transmission occasion ends; or the effective time of the first information may be as follows: The first information takes effect at a start sending moment of an SSB (namely, a first SSB after the transmission configuration is updated) after the first information. For example, the S time units may be S frames, S subframes, S slots, S time domain symbols, S milliseconds (ms), or S seconds (s). A granularity of the S time units is not limited in this application. The preset time length may be S frames, S subframes, S slots, S time domain symbols, S milliseconds (ms), S seconds (s), or the like. A value of S may be a positive integer.

For example, a value of S may be the same as a value of T. In other words, the effective time of the first information is as follows: The first information takes effect at the start sending moment of the next first SSB after the first information. Alternatively, a value of S may be less than a value of T. In other words, the effective time of the first information is as follows: The first information takes effect before the start sending moment of the next first SSB after the first information. Alternatively, a value of S may be greater than a value of T. In this case, because the first SSB is periodically sent, the effective time of the first information may be as follows: The first information takes effect after at an end of a transmission occasion of a next first SSB after the sending occasion of the first information.

It should be understood that, because SSBs that need to be detected or received by a plurality of terminal devices (for example, all terminal devices in a cell) are the same, for example, are all first SSBs, the transmission occasion of the first information is a transmission occasion or a monitoring occasion corresponding to all of the plurality of terminal devices. In other words, transmission occasions, of the first information, corresponding to the plurality of terminal devices are the same. The plurality of terminal devices may detect the first information on the same transmission occasion (one or more transmission occasions).

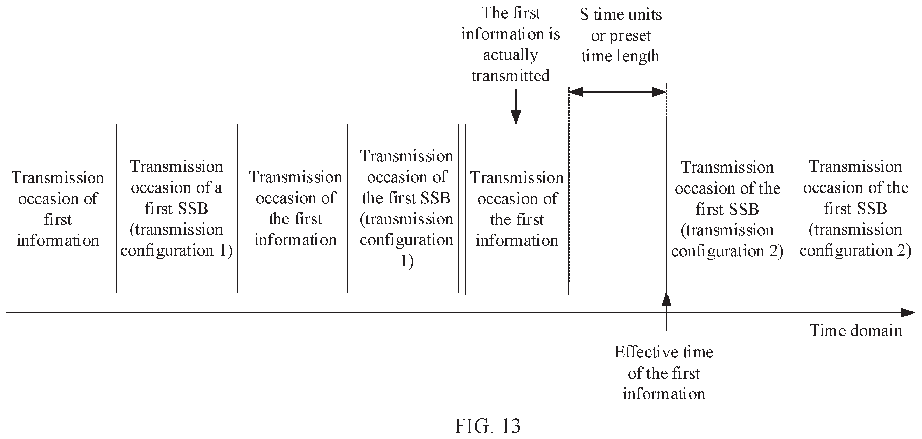

For example, FIG. 13 is a diagram of another example of a transmission occasion and an effective time of first information. As shown in FIG. 13, the first information may correspond to a plurality of transmission occasions. In other words, the first information may be sent on any one of the plurality of transmission occasions. Before the first information is sent, the transmission configuration of the first SSB is a transmission configuration 1. In other words, the first SSB is sent based on the transmission configuration 1. Then, the transmission configuration of the first SSB changes, and changes to a transmission configuration 2. In other words, the first SSB is sent based on the transmission configuration 2. For example, the transmit beam of the first SSB changes. In this case, the first information includes the transmission configuration 2 of the first SSB. A start moment of the transmission occasion of the first information may be a T^{th} time unit before a transmission occasion of a first SSB (a first SSB corresponding to the transmission configuration 2) after the transmission configuration is updated; or a start moment of the transmission occasion of the first information may be before a transmission occasion of a first SSB after the transmission configuration is updated and is separated, by a preset time length, from the transmission occasion of the first SSB after the transmission configuration is updated. The effective time of the first information may be as follows: The first information takes effect at an S^{th} time unit after a corresponding transmission occasion (namely, a transmission occasion on which the first information is actually transmitted or a transmission occasion on which the first information is located and that is detected by the terminal device); or the first information takes effect at an end of a preset time length after a corresponding transmission occasion ends.

In the foregoing manner, the plurality of terminal devices (for example, all the terminal devices in the cell) detect the first information on the same transmission occasion. In other words, the plurality of terminal devices detect the same transmission occasion. The network device does not need to separately send the first information to each terminal device, thereby reducing the amount of first information to be sent by the network device, and reducing overheads and power consumption of sending the first message by the network device. Before the transmission configuration of the first SSB changes (that is, before the first information takes effect), the terminal device may obtain the updated transmission configuration of the first SSB in a timely manner, to ensure that the terminal device can correctly receive the first SSB.

Optionally, in some other possible implementations, the first information may be new signaling or new information. It is assumed that the transmission occasion of the first information may be as follows: Time domain resources used by the transmission occasion of the first information are all or partially the same as time domain resources used by the transmission occasion of the first SSB (or a transmission occasion of each first SSB), and a frequency domain resource used by the transmission occasion of the first information is different from the frequency domain resource used by the transmission occasion of the first SSB (or the transmission occasion of each first SSB). In other words, the transmission occasion of the first information and the transmission occasion of the first SSB are on different frequencies. In other words, the network device separately sends the first information and the first SSB on all or partially same time domain resources and different frequency domain resources. In other words, the first information and the first SSB are sent in a frequency division manner.

For example, if the transmission configuration of the first SSB changes, and the first information may include or indicate an updated (changed) transmission configuration of the first SSB, the transmission occasion of the first information and a changed transmission occasion of the first SSB are still on different frequencies. In other words, in this case, time domain resources used by the transmission occasion of the first information are all or partially the same as time domain resources used by the changed transmission occasion of the first SSB, and a frequency domain resource used by the transmission occasion of the first information is different from a frequency domain resource used by the changed transmission occasion of the first SSB. In other words, after the transmission configuration of the first SSB is updated, the network device still separately sends the first information and the first SSB on all or partially same time domain resources and different frequency domain resources. In other words, after the transmission configuration of the first SSB is updated, the first information and the first SSB are still sent in a frequency division manner.

Optionally, in this case, the first information may take effect at a Y^{th} time unit after a corresponding transmission occasion (namely, a transmission occasion on which the first information is actually transmitted or a transmission occasion on which the first information is located and that is detected by the terminal device) ends; or the first information takes effect at an end of a preset time length after a corresponding transmission occasion ends; or the first information may take effect at a start sending moment of a next SSB (namely, a first SSB after the transmission configuration is updated) after an SSB (a first SSB before the transmission configuration is updated) corresponding to the transmission occasion.

It should be understood that, because SSBs that need to be detected or received by a plurality of terminal devices (for example, all terminal devices in a cell) are the same, for example, are all first SSBs, the transmission occasion of the first information is a transmission occasion or a monitoring occasion corresponding to all of the plurality of terminal devices. In other words, transmission occasions, of the first information, corresponding to the plurality of terminal devices are the same. The plurality of terminal devices may detect the first information on the same transmission occasion (one or more transmission occasions).

It may be understood that if the transmission resource used by the first SSB changes, for example, a beam, a time domain resource, or a frequency domain resource used by the first SSB changes, because the first information and the first SSB are on different frequencies, the transmission resource of the first information also adaptively changes. For example, if the beam used by the first SSB changes from original four beams to two beams, and a change of a transmission resource of the first information is as follows: Original transmission of the first information on time-frequency resources corresponding to the four beams changes to transmission of the first information on time-frequency resources corresponding to the two beams, thereby reducing the amount of first information to be sent, and reducing overheads of communication resources.

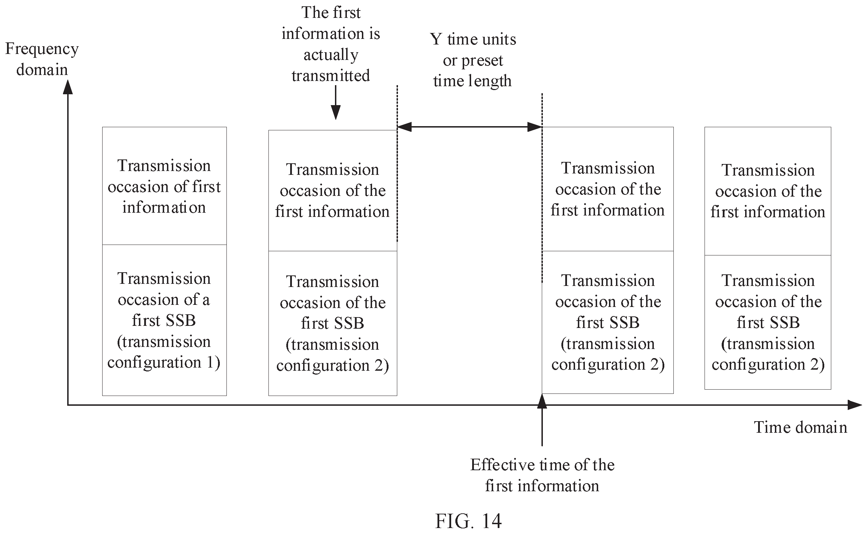

For example, FIG. 14 is a diagram of another example of a transmission occasion and an effective time of first information. As shown in FIG. 14, before the first information takes effect, the transmission configuration of the first SSB is a transmission configuration 1. After the first information takes effect, the transmission configuration of the first SSB changes, and changes to a transmission configuration 2. For example, a transmit beam of the first SSB changes. In this case, the first information includes the transmission configuration 2 of the first SSB. A time domain resource used by the transmission occasion of the first information is the same as a time domain resource used by a transmission occasion of a first SSB corresponding to the transmission configuration 2, and a frequency domain resource used by the transmission occasion of the first information is different from a frequency domain resource used by the transmission occasion of the first SSB corresponding to the transmission configuration 2. The first information takes effect at a Y^{th} time unit after a corresponding transmission occasion (namely, a transmission occasion on which the first information is actually transmitted or a transmission occasion on which the first information is located and that is detected by the terminal device); or the first information takes effect at an end of a preset time length after a corresponding transmission occasion ends; or the first information takes effect at a start sending moment of a next SSB (a first SSB that uses the transmission configuration 2) after an SSB (a first SSB that uses the transmission configuration 1) corresponding to the transmission occasion.

In the foregoing manner, the plurality of terminal devices (for example, all terminal devices in a cell) detect the first information on the same transmission occasion, and the network device does not need to separately send the first information to each terminal device, thereby reducing the amount of first information to be sent by the network device. In addition, the first information and the SSB are sent in a frequency division manner, thereby reducing overheads and power consumption of sending the first message by the network device.

Optionally, the transmission occasion of the first information, the effective time of the first information, the preset time length, the Y time units, and the like may be predefined, or may be indicated by the network device to the terminal device through signaling, or may be preconfigured (or configured). This is not limited herein in this embodiment of this application.

Optionally, in some possible implementations, if there are SSBs with a plurality of configurations, the first SSB may be an SSB with any configuration, and the second SSB may be an SSB with another configuration. For example, the first SSB is a short-periodicity SSB, and the second SSB is a long-periodicity SSB. The first information includes the transmission configuration of the first SSB.

Certainly, the first SSB may also be replaced with the first synchronization signal, and the second SSB may also be replaced with a second synchronization signal. The second synchronization signal and the first synchronization signal may be different synchronization signals (that is, the second synchronization signal is different from the first synchronization signal). For example, that the second synchronization signal is different from the first synchronization signal may include that a transmission occasion of the second synchronization signal is different from a transmission occasion of the first synchronization signal.

Optionally, in a possible implementation, a start moment of the transmission occasion of the first information may be an M^{th} time unit before the transmission occasion of the first SSB (or the transmission occasion of each first SSB); or a start moment of the transmission occasion of the first information may be before the transmission occasion of the first SSB (or the transmission occasion of each first SSB) and separated from the transmission occasion of the first SSB by a preset time length (that is, the start moment of the transmission occasion of the first information may be before the transmission occasion of each first SSB and separated from a start sending moment of the first SSB by a time interval of a preset time length).

Optionally, in another possible implementation, a start moment of the transmission occasion of the first information may be an R^{th} time unit before or after the transmission occasion of the second SSB; or a start moment of the transmission occasion of the first information may be before or after the transmission occasion of the second SSB and separated from the transmission occasion of the second SSB by a preset time length (that is, the start moment of the transmission occasion of the first information may be before or after the transmission occasion of the second SSB and separated from a start sending moment of the second SSB by a time interval of a preset time length).

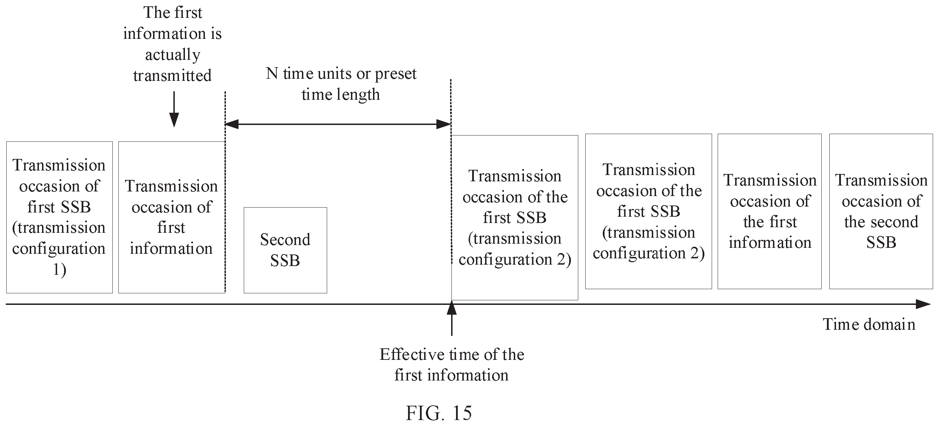

For example, if the transmission configuration of the first SSB changes, the first information includes or indicates the transmission configuration of the first SSB. For example, in an example shown in FIG. 15, before the first information is sent (transmitted), the transmission configuration of the first SSB is a transmission configuration 1. Then, if the transmission configuration of the first SSB changes, and changes to a transmission configuration 2, a start moment of the transmission occasion of the first information may be an M^{th} time unit before a transmission occasion of a first SSB (namely, a first SSB corresponding to the transmission configuration 2) after the transmission configuration is updated; or a start moment of the transmission occasion of the first information may be before the transmission occasion of the first SSB after the transmission configuration is updated and is separated, by a preset time length, from the transmission occasion of the first SSB after the transmission configuration is updated (that is, the start moment of the transmission occasion of the first information is before the transmission occasion of the first SSB after the transmission configuration is updated and is separated, by a time interval of a preset time length, from a start sending moment of the first SSB after the transmission configuration is updated).

For example, the effective time of the first information may be as follows: The first information takes effect at an N^{th} time unit after a corresponding transmission occasion (namely, a transmission occasion on which the first information is actually transmitted or a transmission occasion on which the first information is located and that is detected by the terminal device); or the effective time of the first information may be as follows: The first information takes effect at an end of a preset time length after a corresponding transmission occasion ends; or the effective time of the first information may be as follows: The first information takes effect at a start sending moment of a first SSB (the first SSB corresponding to the transmission configuration 2) corresponding to the first information after the first information.

For example, a value of N may be the same as a value of M. In other words, the effective time of the first information is as follows: The first information takes effect at a start sending moment of a next first SSB (the first SSB after the transmission configuration is updated) after the first information. Alternatively, a value of N may be less than a value of M. In other words, the effective time of the first information is as follows: The first information takes effect before a start sending moment of a next first SSB after the first information. Alternatively, a value of N may be greater than a value of M. In this case, because the first SSB is periodically sent, the effective time of the first information may be as follows: The first information takes effect after a transmission occasion of a next first SSB after a sending occasion of the first information.

It should be understood that, because SSBs that need to be detected or received by a plurality of terminal devices (for example, all terminal devices in a cell) are the same, for example, are all first SSBs, the transmission occasion of the first information is a transmission occasion or a monitoring occasion corresponding to all of the plurality of terminal devices. In other words, transmission occasions, of the first information, corresponding to the plurality of terminal devices are the same. The plurality of terminal devices may detect the first information on the same transmission occasion (one or more transmission occasions).

Optionally, in some possible implementations, if there are SSBs with a plurality of configurations, the first SSB may be an SSB with any configuration, and the second SSB may be an SSB with another configuration. For example, the first SSB is a short-periodicity SSB, and the second SSB is a long-periodicity SSB. The first information includes the transmission configuration of the first SSB. In this case, a time domain resource used by the transmission occasion of the first information may be partially or completely the same as a time domain resource used by a transmission occasion of the second SSB (or a transmission occasion of each second SSB), and a frequency domain resource used by the transmission occasion of the first information is different from a frequency domain resource used by the transmission occasion of the second SSB (or a transmission occasion of each second SSB). In other words, the transmission occasion of the first information and the transmission occasion of the second SSB are on different frequencies. In other words, the network device separately sends the first information and the second SSB on all or partially same time domain resources and different frequency domain resources. In other words, the first information and the second SSB are sent in a frequency division manner.

Certainly, the first SSB may also be replaced with the first synchronization signal, and the second SSB may also be replaced with a second synchronization signal. The second synchronization signal and the first synchronization signal are different synchronization signals (that is, the second synchronization signal is different from the first synchronization signal). For example, that the second synchronization signal is different from the first synchronization signal may include that a transmission occasion of the second synchronization signal is different from a transmission occasion of the first synchronization signal.

For example, if the transmission configuration of the first SSB changes, the first information includes or indicates a changed transmission configuration of the first SSB. Before the first information is sent, the transmission configuration of the first SSB is a transmission configuration 1. Then, the transmission configuration of the first SSB changes, and changes to the transmission configuration 2. In this case, the transmission occasion of the first information may be before a transmission occasion of a first SSB (namely, a first SSB corresponding to the transmission configuration 2) after the transmission configuration is updated, time domain resources used by the transmission occasion of the first information are all or partially the same as time domain resources used by the transmission occasion of the second SSB, and a frequency domain resource used by the transmission occasion of the first information is different from a frequency domain resource used by the transmission occasion of the second SSB. In other words, after the transmission configuration of the first SSB is updated, the network device still separately sends the first information and the second SSB on all or partially same time domain resources and different frequency domain resources.

For another example, if the transmission configuration of the second SSB changes, the transmission occasion of the first information and a changed transmission occasion of the second SSB are still on different frequencies. In other words, in this case, time domain resources used by the transmission occasion of the first information are all or partially the same as time domain resources used by the changed transmission occasion of the second SSB, and a frequency domain resource used by the transmission occasion of the first information is different from a frequency domain resource used by the changed transmission occasion of the second SSB. In other words, after the transmission configuration of the second SSB is updated, the network device still separately sends the first information and the second SSB on all or partially same time domain resources and different frequency domain resources. In other words, after the transmission configuration of the second SSB is updated, the first information and the second SSB are still sent in a frequency division manner.

For example, in this case, the first information may take effect at an L^{th} time unit after a corresponding transmission occasion (namely, a transmission occasion on which the first information is actually transmitted or a transmission occasion on which the first information is located and that is detected by the terminal device) ends; or the effective time of the first information may be as follows: The first information takes effect at an end of a preset time length after a corresponding transmission occasion ends; or the first information may take effect at a start sending moment of a next SSB (namely, a first SSB corresponding to the transmission configuration 2) after sending of an SSB (the second SSB) corresponding to the transmission occasion ends.

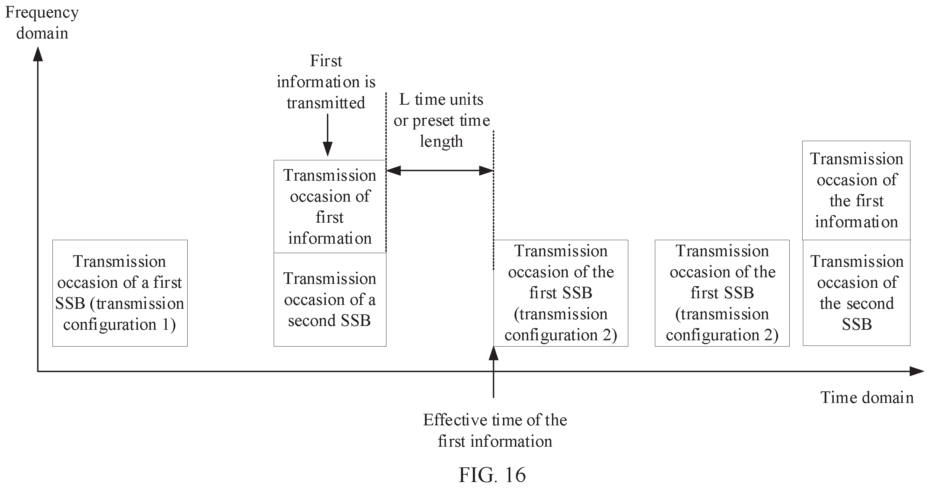

For example, FIG. 16 is a diagram of another example of a transmission occasion and an effective time of first information. As shown in FIG. 16, it is assumed that the first SSB is a short-periodicity SSB, the second SSB is a long-periodicity SSB, the transmission configuration of the first SSB changes, before the first information takes effect, the transmission configuration of the first SSB is a transmission configuration 1, and after the first information takes effect, the transmission configuration of the first SSB changes, and changes to a transmission configuration 2. In this case, the first information includes the transmission configuration 2 of the first SSB. A time domain resource used by the transmission occasion of the first information is the same as a time domain resource used by the transmission occasion of the second SSB, and a frequency domain resource used by the transmission occasion of the first information is different from a frequency domain resource used by the transmission occasion of the second SSB. The first information takes effect at a start sending moment of a next SSB (the first SSB) after an SSB (the second SSB) corresponding to a transmission occasion (namely, a transmission occasion on which the first information is actually transmitted), or the first information takes effect at an L^{th} time unit after a corresponding transmission occasion ends.

It should be understood that, because SSBs that need to be detected or received by a plurality of terminal devices (for example, all terminal devices in a cell) are the same, for example, are all first SSBs, the transmission occasion of the first information is a transmission occasion or a monitoring occasion corresponding to all of the plurality of terminal devices. In other words, transmission occasions, of the first information, corresponding to the plurality of terminal devices are the same. The plurality of terminal devices may detect the first information on the same transmission occasion.

In the foregoing manner, in a dual-SSB configuration, the plurality of terminal devices (for example, all terminal devices in a cell) detect the first information on the same transmission occasion, and the network device does not need to separately send the first information to each terminal device, thereby reducing the amount of first information to be sent by the network device. In addition, the first information and the second SSB are sent in a frequency division manner, thereby reducing overheads and power consumption of sending the first message by the network device.

Optionally, the transmission occasion of the first information, the effective time of the first information, the preset time length, the Y time units, and the like may be predefined, or may be indicated by the network device to the terminal device through signaling, or may be preconfigured (or configured). This is not limited herein in this embodiment of this application.

Optionally, when the first information is new signaling or new information, the first information may be carried in a sequence, a new DCI type, or a PBCH. Optionally, configuration information of the transmission resource of the first information may be carried in system information.

It should be further understood that in this embodiment of this application, if the terminal device does not detect the first information on the transmission occasion of the first information, the transmission configuration, of the first SSB, used by the terminal device remains unchanged, and the terminal device uses the original transmission configuration of the first SSB to receive the first SSB. Alternatively, if the network device does not send the first information on the transmission occasion of the first information, the transmission configuration, of the first SSB, used by the network device remains unchanged. In other words, the original transmission configuration of the first SSB is used to send the first SSB.

According to the information transmission method provided in this application, the network device may notify the terminal device of the transmission configuration of the first SSB by using the first information. For example, the transmission configuration of the first SSB may be an updated or changed transmission configuration of the first SSB, or the transmission configuration of the first SSB may be an initial transmission configuration of the first SSB (for example, a changed transmission configuration of the first SSB). Terminal devices in various states may all receive the first information, to obtain a transmission configuration change status of the first SSB based on the first information. In this way, the terminal devices in various states can correctly receive the first SSB, thereby ensuring normal running of communication. This reduces of communication resources overheads and notification delay, and increases the efficiency and speed of obtaining a transmission configuration of the SSB by the terminal device. In addition, the effective time of the first information is predefined, preconfigured, or indicated to the terminal device, to ensure that the terminal device and the network device have a consistent understanding of the effective time of the first information, and the terminal device and the network device may perform alignment in terms of when the transmission configuration of the first SSB changes, thereby ensuring reliability and efficiency of transmission of the first information, and further ensuring transmission reliability of the first SSB.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing method embodiments may be unnecessary, some steps may be newly added, or Alternatively, any two or more of the foregoing embodiments are combined. A modified, changed, or combined solution also falls within the scope of embodiments of this application.

It should be further understood that division into the manners, cases, categories, and embodiments in embodiments of this application is merely intended for ease of description, and should not constitute a particular limitation. The features in the manners, categories, cases, and embodiments may be combined without contradiction.

It should be further understood that numerals used in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between the embodiments. For same or similar parts that are not mentioned, refer to the embodiments. For brevity, details are not described herein again.

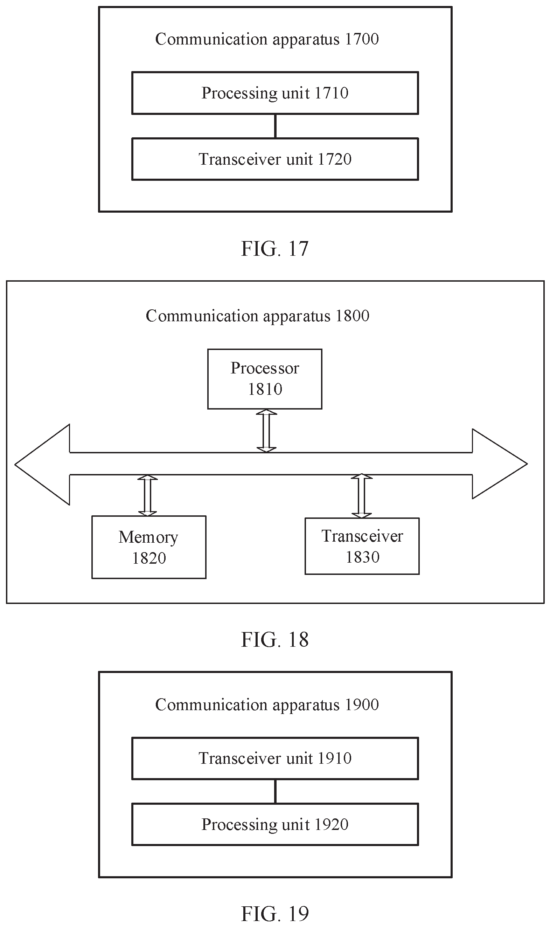

The foregoing describes in detail the method in embodiments of this application with reference to FIG. 1 to FIG. 16. The following describes in detail communication apparatuses in embodiments of this application with reference to FIG. 17 to FIG. 22.

In embodiments, a terminal device and a network device may be divided into functional modules according to the foregoing methods. For example, each functional module may be obtained through division based on each corresponding function, or two or more functions may be integrated into one processing module. The integrated module may be implemented in a form of hardware. It should be noted that, in embodiments, division into the modules is an example, is merely logical function division, and may be other division in an actual implementation.

It should be noted that related content of the steps in the foregoing method embodiments may be referenced to function descriptions of corresponding functional modules, and details are not described herein again.

The terminal device and the network device provided in embodiments of this application are configured to perform any information transmission method provided in the foregoing method embodiments. Therefore, the same effects as the foregoing implementation method can be achieved. When an integrated unit is used, the terminal device or the network device may include a processing module, and an optional storage module and communication module. The processing module may be configured to control and manage an action of the terminal device or the network device, for example, may be configured to support the terminal device or the network device in performing a step performed by a processing unit. The storage module may be configured to support storage of program code, data, and the like. The communication module may be configured to support the terminal device or the network device in communicating with another device.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, such as a radio frequency circuit or a Bluetooth chip.

For example, FIG. 17 is a block diagram of a communication apparatus 1700 according to an embodiment of this application. The communication apparatus 1700 may correspond to the network device described in the method 800, or may be a chip or a component used in the network device. In addition, modules or units in the communication apparatus 1700 are separately configured to perform actions or processing performed by the network device in any possible implementation of the method 800.

As shown in FIG. 17, the communication apparatus 1700 includes a processing unit 1710 and a transceiver unit 1720. The transceiver unit 1720 is configured to perform specific signal receiving and sending under control of the processing unit 1710. The processing unit may also be referred to as a processing module, and the transceiver unit may also be referred to as a communication unit or a communication module.

The processing unit 1710 is configured to generate first information. The first information indicates a transmission configuration of a first synchronization signal, and the transmission configuration of the first synchronization signal includes at least one of the following: a sending periodicity of the first synchronization signal, a sending offset of the first synchronization signal, or an actual transmission status of the first synchronization signal on a transmission occasion corresponding to the first synchronization signal.

The transceiver unit 1720 is configured to send the first information.

According to the communication apparatus provided in this application, the first information is used to notify the terminal device of the transmission configuration of the first synchronization signal (for example, a first SSB), and terminal devices in various states may all receive the first information, to obtain a transmission configuration change status of the first synchronization signal based on the first information. In this way, the terminal devices in various states can correctly receive the first synchronization signal, thereby ensuring normal running of communication. Compared with an SI updating procedure, in this way, only a first message is required, which requires fewer communication resources and a shorter procedure time, thereby reducing overhead of communication resources and notification delay, and increasing the efficiency and speed of obtaining the transmission configuration of the first synchronization signal by the terminal device.

In some possible implementations, the first information is carried in paging DCI, paging early indication DCI, or a paging message.

In some possible implementations, a first value of a short message indicator field in the paging DCI indicates that the paging DCI includes the first information, and the first information is carried in a first field in the paging DCI; or a first value of a short message indicator field in the paging DCI indicates that the paging message includes the first information, and the first information is carried in the paging message.

In some possible implementations, a short message field in the paging DCI carries the first information; or a short message field in the paging DCI indicates that the paging DCI includes the first information, and the first information is carried in a first field in the paging DCI; or a short message field in the paging DCI indicates that the paging message includes the first information, and the first information is carried in the paging message.

In some possible implementations, the first information takes effect at an end of a paging periodicity corresponding to the carried paging DCI, paging early indication DCI, or paging message carrying the first information; or the first information takes effect at an end of a configuration periodicity corresponding to the received paging DCI, paging early indication DCI, or paging message carrying the first information.

In some possible implementations, the first information is carried in first DCI, the first DCI is different from paging DCI or paging early indication DCI, and a transmission occasion of the first DCI is the same as a transmission occasion of the paging DCI or the paging early indication DCI.

In some possible implementations, a transmission occasion of the first information is a first transmission occasion, and the first transmission occasion is a transmission occasion of paging DCI corresponding to a terminal device with a first ID, or a transmission occasion of paging early indication DCI corresponding to a terminal device with a first ID.

In some possible implementations, a start moment of a transmission occasion of the first information is one of the following: an M^{th} time unit before the transmission occasion of the first synchronization signal; or before the transmission occasion of the first synchronization signal and separated from the transmission occasion of the first synchronization signal by a preset time length; or before the transmission occasion of the first synchronization signal and separated from a start sending moment of the first synchronization signal by a time interval of a preset time length.

In some possible implementations, a start moment of a transmission occasion of the first information is an R^{th} time unit before a transmission occasion of a second synchronization signal; or a transmission occasion of the first information is before a transmission occasion of a second synchronization signal and separated from the transmission occasion of the second synchronization signal by a preset time length; or a transmission occasion of the first information is before a transmission occasion of a second synchronization signal and separated from a start sending moment of the second synchronization signal by a time interval of a preset time length; and the second synchronization signal is different from the first synchronization signal.

In some possible implementations, a time domain resource occupied by a transmission occasion of the first information is partially or completely the same as a time domain resource occupied by the transmission occasion of the first synchronization signal, and a frequency domain resource occupied by the transmission occasion of the first information is different from a frequency domain resource occupied by the transmission occasion of the first synchronization signal.

In some possible implementations, a time domain resource occupied by a transmission occasion of the first information is partially or completely the same as a time domain resource occupied by a transmission occasion of a second synchronization signal, a frequency domain resource occupied by the transmission occasion of the first information is different from a frequency domain resource occupied by the transmission occasion of the second synchronization signal, and the second synchronization signal is different from the first synchronization signal.

In some possible implementations, the first information takes effect in an N^{th} time unit after the corresponding transmission occasion ends; or the first information takes effect at an end of a preset time length after the corresponding transmission occasion ends; or the first information takes effect at the start sending moment of the first synchronization signal that occurs after the first information.

It should be understood that for a specific process in which each unit in the communication apparatus 1700 performs the corresponding step, refer to the foregoing descriptions related to the network device with reference to related embodiments in the method 800. For brevity, details are not described herein again.

Optionally, the transceiver unit 1720 may include a receiving unit (module) and a sending unit (module), configured to perform the steps of receiving information and sending information by the network device in embodiments in the method 800.

Further, the communication apparatus 1700 may further include a storage unit. The transceiver unit 1720 may be a transceiver, an input/output interface, or an interface circuit. The storage unit is configured to store instructions executed by the transceiver unit 1720 and the processing unit 1710. The transceiver unit 1720, the processing unit 1710, and the storage unit are coupled to each other. The storage unit stores the instructions. The processing unit 1710 is configured to execute the instructions stored in the storage unit. The transceiver unit 1720 is configured to perform specific signal receiving and sending under the control of the processing unit 1710.

It should be understood that the transceiver unit 1720 may be a transceiver, an input/output interface, or an interface circuit. The storage unit may be a memory. The processing unit 1710 may be implemented by a processor. As shown in FIG. 18, a communication apparatus 1800 may include a processor 1810, a memory 1820, and a transceiver 1830.

The communication apparatus 1700 shown in FIG. 17 or the communication apparatus 1800 shown in FIG. 18 can implement the steps performed by the network device in the method 800. For similar descriptions, refer to the descriptions in the foregoing corresponding methods. To avoid repetition, details are not described herein again.

It should be further understood that the communication apparatus 1700 shown in FIG. 17 or the communication apparatus 1800 shown in FIG. 18 may be a network device, or a network device may include the communication apparatus 1700 shown in FIG. 17 or the communication apparatus 1800 shown in FIG. 18.

For example, FIG. 19 is a block diagram of a communication apparatus 1900 according to an embodiment of this application. The communication apparatus 1900 may correspond to the terminal device described in the method 800, or may be a chip or a component used in the terminal device. In addition, modules or units in the communication apparatus 1900 are separately configured to perform actions or processing performed by the terminal device in any possible implementation of the method 800.

As shown in FIG. 19, the communication apparatus 1900 includes a transceiver unit 1910 and a processing unit 1920. The transceiver unit 1910 is configured to perform specific signal receiving and sending under control of the processing unit 1920.

The transceiver unit 1910 is configured to receive first information. The first information indicates a transmission configuration of a first synchronization signal, and the transmission configuration of the first synchronization signal includes at least one of the following: a sending periodicity of the first synchronization signal, a sending offset of the first synchronization signal, or an actual transmission status of the first synchronization signal on a transmission occasion corresponding to the first synchronization signal.

The processing unit 1920 is configured to determine the transmission configuration of the first synchronization signal based on the first information.

According to the communication apparatus provided in this embodiment of this application, the transmission configuration of the first synchronization signal (for example, a first SSB) is learned of based on the first information, to obtain a transmission configuration change status of the first synchronization signal based on the first information. Compared with an SI updating procedure, in this way, only a first message is required, which requires fewer communication resources and a shorter procedure time, thereby reducing overhead of communication resources and notification delay, and increasing the efficiency and speed of obtaining the transmission configuration of the first synchronization signal by the communication apparatus.

In some possible implementations, the first information is carried in paging DCI, paging early indication DCI, or a paging message.

In some possible implementations, a first value of a short message indicator field in the paging DCI indicates that the paging DCI includes the first information, and the first information is carried in a first field in the paging DCI; or a first value of a short message indicator field in the paging DCI indicates that the paging message includes the first information, and the first information is carried in the paging message.

In some possible implementations, a short message field in the paging DCI carries the first information; or a short message field in the paging DCI indicates that the paging DCI includes the first information, and the first information is carried in a first field in the paging DCI; or a short message field in the paging DCI indicates that the paging message includes the first information, and the first information is carried in the paging message.

In some possible implementations, the first information takes effect at an end of a paging periodicity corresponding to the received paging DCI, paging early indication DCI, or paging message carrying the first information; or the first information takes effect at an end of a configuration periodicity corresponding to the received paging DCI, paging early indication DCI, or paging message carrying the first information.

In some possible implementations, the first information is carried in first DCI, the first DCI is different from paging DCI or paging early indication DCI, and a transmission occasion of the first DCI is the same as a transmission occasion of the paging DCI or the paging early indication DCI.

In some possible implementations, a transmission occasion of the first information is a first transmission occasion, and the first transmission occasion is a transmission occasion of paging DCI corresponding to a terminal device with a first ID, or a transmission occasion of paging early indication DCI corresponding to a terminal device with a first ID.

In some possible implementations, a start moment of a transmission occasion of the first information is one of the following: an M^{th} time unit before the transmission occasion of the first synchronization signal; or before the transmission occasion of the first synchronization signal and separated from the transmission occasion of the first synchronization signal by a preset time length; or before the transmission occasion of the first synchronization signal and separated from a start sending moment of the first synchronization signal by a time interval of a preset time length.

In some possible implementations, a start moment of a transmission occasion of the first information is an R^{th} time unit before a transmission occasion of a second synchronization signal; or a transmission occasion of the first information is before a transmission occasion of a second synchronization signal and separated from the transmission occasion of the second synchronization signal by a preset time length; or a transmission occasion of the first information is before a transmission occasion of a second synchronization signal and separated from a start sending moment of the second synchronization signal by a time interval of a preset time length; and the second synchronization signal is different from the first synchronization signal.

In some possible implementations, a time domain resource occupied by a transmission occasion of the first information is partially or completely the same as a time domain resource occupied by the transmission occasion of the first synchronization signal, and a frequency domain resource occupied by the transmission occasion of the first information is different from a frequency domain resource occupied by the transmission occasion of the first synchronization signal.

In some possible implementations, a time domain resource occupied by a transmission occasion of the first information is partially or completely the same as a time domain resource occupied by a transmission occasion of a second synchronization signal, a frequency domain resource occupied by the transmission occasion of the first information is different from a frequency domain resource occupied by the transmission occasion of the second synchronization signal, and the second synchronization signal is different from the first synchronization signal.

In some possible implementations, the first information takes effect in an N^{th} time unit after the corresponding transmission occasion ends; or the first information takes effect at an end of a preset time length after the corresponding transmission occasion ends; or the first information takes effect at the start sending moment of the first synchronization signal that occurs after the first information.

Further, the communication apparatus 1900 may include a storage unit, and the transceiver unit 1910 may be a transceiver, an input/output interface, or an interface circuit. The storage unit is configured to store instructions executed by the transceiver unit 1910 and the processing unit 1920. The transceiver unit 1910, the processing unit 1920, and the storage unit are coupled to each other. The storage unit stores the instructions. The processing unit 1920 is configured to execute the instructions stored in the storage unit. The transceiver unit 1910 is configured to perform specific signal receiving and sending under the control of the processing unit 1920.

It should be understood that for a specific process in which each unit in the communication apparatus 1900 performs the corresponding step, refer to the foregoing descriptions related to the terminal device with reference to related embodiments in the method 800. For brevity, details are not described herein again.

It should be understood that the transceiver unit 1910 may be a transceiver, an input/output interface, or an interface circuit. The storage unit may be a memory. The processing unit 1920 may be implemented by a processor.

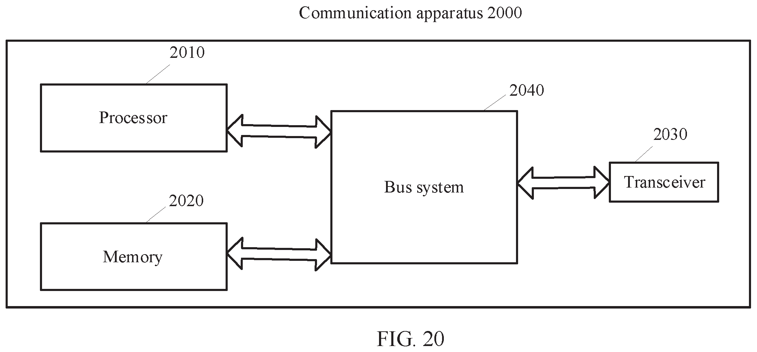

For example, as shown in FIG. 20, a communication apparatus 2000 may include a processor 2010, a memory 2020, a transceiver 2030, and a bus system 2040. Components of the communication apparatus 2000 are coupled together through the bus system 2040. In addition to a data bus, the bus system 2040 may further include a power bus, a control bus, a status signal bus, and the like. However, for clear description, various buses are marked as the bus system 2040 in FIG. 20. For ease of illustration, FIG. 20 shows merely an example of the bus system 2040.

The communication apparatus 1900 shown in FIG. 19 or the communication apparatus 2000 shown in FIG. 20 can implement the steps performed by the terminal device in the method 800. For similar descriptions, refer to the descriptions in the foregoing corresponding methods. To avoid repetition, details are not described herein again.

It should be further understood that the communication apparatus 1900 shown in FIG. 19 or the communication apparatus 2000 shown in FIG. 20 may be a terminal device, or a terminal device may include the communication apparatus 1900 shown in FIG. 19 or the communication apparatus 2000 shown in FIG. 20.

For example, the terminal device may be a terminal device in an RRC connected state (RRC_CONNECTED), a terminal device in an RRC inactive state (RRC_INACTIVE), or a terminal device in an RRC idle state (RRC_IDLE).

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

For example, a unit in any one of the foregoing apparatuses may be one or more integrated circuits configured to implement the foregoing methods, for example, one or more application-specific integrated circuits (application-specific integrated circuit, ASIC), one or more DSPs, one or more field programmable gate arrays (field programmable gate arrays, FPGAs), or a combination of at least two of the integrated circuit forms. For another example, when units in an apparatus are implemented in a form of scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

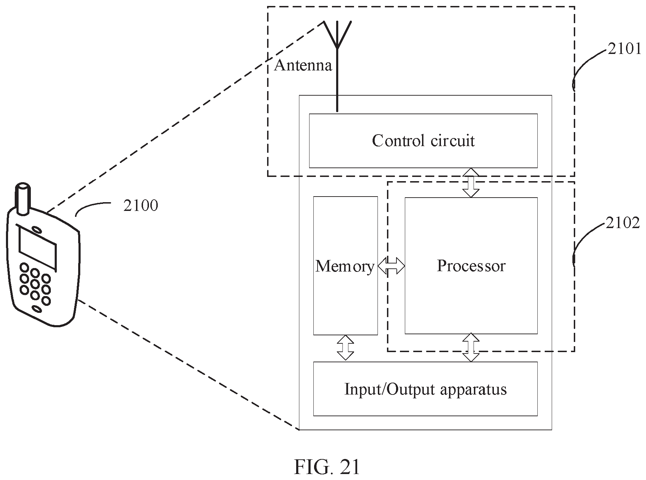

FIG. 21 is a diagram of a structure of a terminal device 2100 according to this application. The communication apparatus 1900 or the communication apparatus 2000 may be configured in the terminal device 2100. Alternatively, the communication apparatus 1900 or the communication apparatus 2000 may be the terminal device 2100. In other words, the terminal device 2100 may perform the actions performed by the terminal device in the method 800. Optionally, for ease of description, FIG. 21 shows only main components of the terminal device. As shown in FIG. 21, the terminal device 2100 includes a processor, a memory, a control circuit, an antenna, and an input/output apparatus.

The processor is mainly configured to: process a communication protocol and communication data; control the entire terminal device; execute a software program; and process data of the software program. For example, the processor is configured to support the terminal device in performing actions described in embodiments of the information transmission method. The memory is mainly configured to store a software program and data, for example, store a transmission configuration of a first SSB and an effective time of first information that are described in the foregoing embodiments. The control circuit is mainly configured to convert a baseband signal and a radio frequency signal and process the radio frequency signal. The control circuit and the antenna may also be referred to as a transceiver together, and are mainly configured to receive and send a radio frequency signal in a form of an electromagnetic wave, for example, receive the first information described in the foregoing embodiments. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When signaling (for example, the foregoing first information) is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 21 shows only one memory and only one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 21. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have receiving and sending functions may be considered as a transceiver unit 1201 of the terminal device 2100, and the processor having a processing function may be considered as a processing unit 2102 of the terminal device 2100. As shown in FIG. 21, the terminal device 2100 includes the transceiver unit 2101 and the processing unit 2102. The transceiver unit may also be referred to as a transceiver, a transceiver machine, a transceiver apparatus, or the like. Optionally, a device that is in the transceiver unit 2101 and that is configured to implement a receiving function may be considered as a receiving unit, and a device that is in the transceiver unit 2101 and that is configured to implement a sending function may be considered as a sending unit. In other words, the transceiver unit 2101 includes the receiving unit and the sending unit. For example, the receiving unit may also be referred to as a receiver, a receive machine, or a receiving circuit, and the sending unit may also be referred to as a transmitter, a transmitter machine, or a transmitting circuit.

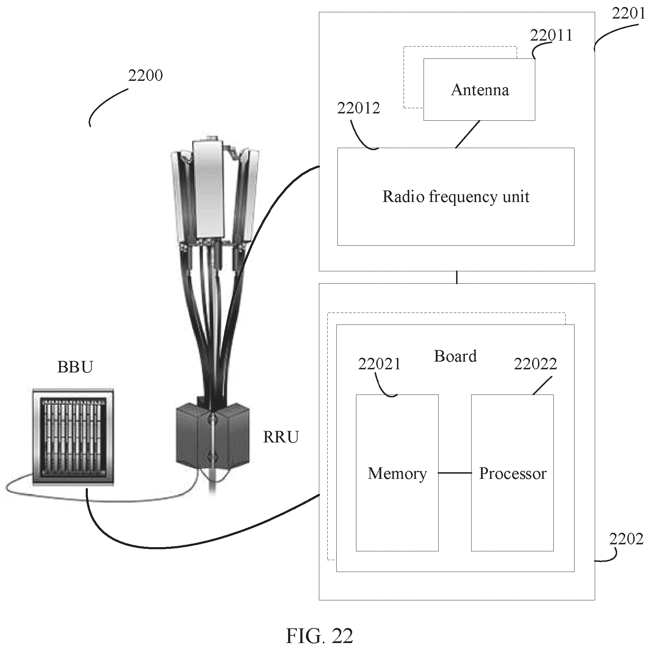

FIG. 22 is a diagram of a structure of a network device 2200 according to an embodiment of this application. The network device 2200 may be configured to implement functions of the network device in the foregoing methods. The network device 2200 includes one or more radio frequency units, for example, a remote radio unit (remote radio unit, RRU) 2201, and one or more baseband units (baseband unit, BBU) (which may also be referred to as a digital unit, (digital unit, DU)) 2202. The RRU 2201 may be referred to as a transceiver unit, a transceiver machine, a transceiver circuit, a transceiver, or the like, and may include at least one antenna 22011 and a radio frequency unit 22012. The part, namely, the RRU 2201 is mainly configured to: receive or send a radio frequency signal, and perform conversion between a radio frequency signal and a baseband signal, for example, configured to send the first information in the foregoing embodiments to a terminal device. The part, namely, the BBU 2202 is mainly configured to: perform baseband processing, control a base station, and the like. The RRU 2201 and the BBU 2202 may be physically disposed together, or may be physically disposed separately, that is, in a distributed base station.

The BBU 2202 is a control center of the base station, may also be referred to as a processing unit, and is mainly configured to complete a baseband processing function, such as channel coding, multiplexing, modulation, or spectrum spreading. For example, the BBU (processing unit) 2202 may be configured to control the base station to perform an operation procedure related to the network device in the foregoing method embodiments.

In an example, the BBU 2202 may include one or more boards. A plurality of boards may together support a radio access network (for example, an LTE system, or a 5G system) of a single access standard, or may separately support radio access networks of different access standards. The BBU 2202 further includes a memory 22021 and a processor 22022. The memory 22021 is configured to store necessary instructions and necessary data. For example, the memory 22021 stores the first information and the effective time of the first information in the foregoing embodiments. The processor 22022 is configured to control the base station to perform a necessary action, for example, configured to control the base station to perform an operation procedure related to the network device in the foregoing method embodiments. The memory 22021 and the processor 22022 may serve one or more boards. In other words, a memory and a processor may be disposed on each board. Alternatively, a plurality of boards may share the same memory and the same processor. In addition, a necessary circuit may be further disposed on each board.

In a possible implementation, with development of a system-on-chip (system-on-chip, SoC) technology, all or some of functions of the part 2202 and the part 2201 may be implemented by using the SoC technology, for example, implemented by using one base station function chip. The base station function chip integrates components such as a processor, a memory, and an antenna port. A program of a base station-related function is stored in the memory, and the processor executes the program to implement the base station-related function. Optionally, the base station function chip can also read a memory outside the chip to implement the base station-related function.

It should be understood that a structure of the network device shown in FIG. 22 is merely a possible form, but should not constitute any limitation on this embodiment of this application. In this application, there may be a base station structure in another form in the future.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an EPROM, an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a communication system. The communication system includes the foregoing terminal device and the foregoing network device.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or function according to embodiments of this application is all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, or microwave) manner.

An embodiment of this application further provides a computer-readable medium, configured to store computer program code. The computer program includes instructions used to perform any information transmission method provided in the foregoing embodiments of this application. The readable medium may be the memory in the foregoing example. This is not limited in this embodiment of this application.

This application further provides a computer program product. The computer program product includes instructions. When the instructions are executed, a terminal device is enabled to perform operations of the terminal device corresponding to the foregoing methods, or a network device is enabled to perform operations of the network device corresponding to the foregoing methods.

An embodiment of this application further provides a chip. The chip includes a processing unit and a communication unit. The processing unit may be, for example, a processor, and the communication unit may be, for example, an input/output interface, a pin, a circuit, or the like. The processing unit may execute computer instructions, so that a chip in a communication apparatus performs any information transmission method provided in embodiments of this application.

Optionally, any communication apparatus provided in embodiments of this application may include the chip.

Optionally, the computer instructions are stored in a storage unit.

Optionally, the storage unit is a storage unit in the chip, for example, a register or a cache. Alternatively, the storage unit may be a storage unit that is in the communication apparatus and that is located outside the chip, for example, a ROM, another type of static storage device that can store static information and instructions, or a RAM. The processor mentioned anywhere above may be a CPU, a microprocessor, an ASIC, or one or more integrated circuits configured to control program execution of the RRC signaling transmission method. The processing unit and the storage unit may be decoupled, are disposed on different physical devices respectively, and are connected in a wired or wireless manner to implement respective functions of the processing unit and the storage unit, to support the chip in implementing various functions in the foregoing embodiments. Alternatively, the processing unit and the memory may be coupled to the same device.

The terms "system" and "network" may be used interchangeably in this specification. The term "and/or" in this specification describes only an association relationship for describing associated objects and represents that three relationships may exist. For example, A and/or B may indicate the following three cases: Only A exists, both A and B exist, and only B exists. In addition, the character "/" in this specification generally indicates an "or" relationship between the associated objects.

In this application, names may be assigned to various objects such as messages/information/devices/systems/apparatuses/actions/operations/procedures. It may be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

It may be clearly understood by a person skilled in the art that, for the purpose of convenient and brief description, for a detailed operating process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method comprises:
receiving first information, wherein the first information indicates a transmission configuration of a first synchronization signal, and the transmission configuration of the first synchronization signal comprises at least one of the following: a sending periodicity of the first synchronization signal, a sending offset of the first synchronization signal, or an actual transmission status of the first synchronization signal on a transmission occasion corresponding to the first synchronization signal; and
determining the transmission configuration of the first synchronization signal based on the first information.

2. The method according to claim 1, wherein the first information is carried in paging DCI, paging early indication DCI, or a paging message.

3. The method according to claim 2, wherein
a first value of a short message indicator field in the paging DCI indicates that the paging DCI comprises the first information, and the first information is carried in a first field in the paging DCI; or
a first value of a short message indicator field in the paging DCI indicates that the paging message comprises the first information, and the first information is carried in the paging message.

4. The method according to claim 2, wherein
a short message field in the paging DCI carries the first information; or
a short message field in the paging DCI indicates that the paging DCI comprises the first information, and the first information is carried in a first field in the paging DCI; or
a short message field in the paging DCI indicates that the paging message comprises the first information, and the first information is carried in the paging message.

5. The method according to any one of claims 2 to 4, wherein the first information takes effect at an end of a paging periodicity corresponding to the received paging DCI, paging early indication DCI, or paging message carrying the first information; or
the first information takes effect at an end of a configuration periodicity corresponding to the received paging DCI, paging early indication DCI, or paging message carrying the first information.

6. The method according to claim 1, wherein the first information is carried in first DCI, the first DCI is different from paging DCI or paging early indication DCI, and a transmission occasion of the first DCI is the same as a transmission occasion of the paging DCI or the paging early indication DCI.

7. The method according to any one of claims 2 to 5, wherein a transmission occasion of the first information is a first transmission occasion, and the first transmission occasion is a transmission occasion of paging DCI corresponding to a terminal device with a first ID, or a transmission occasion of paging early indication DCI corresponding to a terminal device with a first ID.

8. The method according to claim 1, wherein a start moment of a transmission occasion of the first information is one of the following: an M^{th} time unit before the transmission occasion of the first synchronization signal; or before the transmission occasion of the first synchronization signal and separated from the transmission occasion of the first synchronization signal by a preset time length; or before the transmission occasion of the first synchronization signal and separated from a start sending moment of the first synchronization signal by a time interval of a preset time length.

9. The method according to claim 1, wherein a start moment of a transmission occasion of the first information is an R^{th} time unit before a transmission occasion of a second synchronization signal; or a start moment of a transmission occasion of the first information is before a transmission occasion of a second synchronization signal and separated from the transmission occasion of the second synchronization signal by a preset time length; or a start moment of a transmission occasion of the first information is before a transmission occasion of a second synchronization signal and separated from a start sending moment of the second synchronization signal by a time interval of a preset time length; and the second synchronization signal is different from the first synchronization signal.

10. The method according to claim 1, wherein a time domain resource occupied by a transmission occasion of the first information is partially or completely the same as a time domain resource occupied by the transmission occasion of the first synchronization signal, and a frequency domain resource occupied by the transmission occasion of the first information is different from a frequency domain resource occupied by the transmission occasion of the first synchronization signal.

11. The method according to claim 1, wherein a time domain resource occupied by a transmission occasion of the first information is partially or completely the same as a time domain resource occupied by a transmission occasion of a second synchronization signal, a frequency domain resource occupied by the transmission occasion of the first information is different from a frequency domain resource occupied by the transmission occasion of the second synchronization signal, and the second synchronization signal is different from the first synchronization signal.

12. The method according to any one of claims 8 to 11, wherein the first information takes effect in an N^{th} time unit after the corresponding transmission occasion ends; or the first information takes effect at an end of a preset time length after the corresponding transmission occasion ends; or the first information takes effect at the start sending moment of the first synchronization signal that occurs after the first information.

13. An information transmission method, wherein the method comprises:
sending first information, wherein the first information indicates a transmission configuration of a first synchronization signal, and the transmission configuration of the first synchronization signal comprises at least one of the following: a sending periodicity of the first synchronization signal, a sending offset of the first synchronization signal, or an actual transmission status of the first synchronization signal on a transmission occasion corresponding to the first synchronization signal.

14. The method according to claim 13, wherein the first information is carried in paging DCI, paging early indication DCI, or a paging message.

15. The method according to claim 14, wherein
a first value of a short message indicator field in the paging DCI indicates that the paging DCI comprises the first information, and the first information is carried in a first field in the paging DCI; or
a first value of a short message indicator field in the paging DCI indicates that the paging message comprises the first information, and the first information is carried in the paging message.

16. The method according to claim 14, wherein
a short message field in the paging DCI carries the first information; or
a short message field in the paging DCI indicates that the paging DCI comprises the first information, and the first information is carried in a first field in the paging DCI; or
a short message field in the paging DCI indicates that the paging message comprises the first information, and the first information is carried in the paging message.

17. The method according to any one of claims 14 to 16, wherein the first information takes effect at an end of a paging periodicity corresponding to the received paging DCI, paging early indication DCI, or the paging message carrying the first information; or
the first information takes effect at an end of a configuration periodicity corresponding to the received paging DCI, paging early indication DCI, or paging message carrying the first information.

18. The method according to claim 13, wherein the first information is carried in first DCI, the first DCI is different from paging DCI or paging early indication DCI, and a transmission occasion of the first DCI is the same as a transmission occasion of the paging DCI or the paging early indication DCI.

19. The method according to any one of claims 14 to 18, wherein a transmission occasion of the first information is a first transmission occasion, and the first transmission occasion is a transmission occasion of paging DCI corresponding to a terminal device with a first ID, or a transmission occasion of paging early indication DCI corresponding to a terminal device with a first ID.

20. The method according to claim 13, wherein a start moment of a transmission occasion of the first information is one of the following: an M^{th} time unit before the transmission occasion of the first synchronization signal; or before the transmission occasion of the first synchronization signal and separated from the transmission occasion of the first synchronization signal by a preset time length; or before the transmission occasion of the first synchronization signal and separated from a start sending moment of the first synchronization signal by a time interval of a preset time length.

21. The method according to claim 13, wherein a start moment of a transmission occasion of the first information is an R^{th} time unit before a transmission occasion of a second synchronization signal; or a start moment of a transmission occasion of the first information is before a transmission occasion of a second synchronization signal and separated from the transmission occasion of the second synchronization signal by a preset time length; or a start moment of a transmission occasion of the first information is before a transmission occasion of a second synchronization signal and separated from a start sending moment of the second synchronization signal by a time interval of a preset time length; and the second synchronization signal is different from the first synchronization signal.

22. The method according to claim 13, wherein a time domain resource occupied by a transmission occasion of the first information is partially or completely the same as a time domain resource occupied by the transmission occasion of the first synchronization signal, and a frequency domain resource occupied by the transmission occasion of the first information is different from a frequency domain resource occupied by the transmission occasion of the first synchronization signal.

23. The method according to claim 13, wherein a time domain resource occupied by a transmission occasion of the first information is partially or completely the same as a time domain resource occupied by a transmission occasion of a second synchronization signal, a frequency domain resource occupied by the transmission occasion of the first information is different from a frequency domain resource occupied by the transmission occasion of the second synchronization signal, and the second synchronization signal is different from the first synchronization signal.

24. The method according to any one of claims 20 to 23, wherein the first information takes effect in an N^{th} time unit after the corresponding transmission occasion ends; or the first information takes effect at an end of a preset time length after the corresponding transmission occasion ends; or the first information takes effect at the start sending moment of the first synchronization signal that occurs after the first information.

25. A communication apparatus, comprising a unit configured to perform the steps of the method according to any one of claims 1 to 12, or a unit configured to perform the steps of the method according to any one of claims 13 to 24.

26. A communication apparatus, comprising at least one processor and an interface circuit, wherein the at least one processor is configured to perform the method according to any one of claims 1 to 12 or the method according to any one of claims 13 to 24.

27. A communication apparatus, comprising a processor, wherein the processor is coupled to a memory, the memory is configured to store a program or instructions, and when the program or the instructions are executed by the processor, the apparatus is enabled to perform the method according to any one of claims 1 to 12 or the method according to any one of claims 13 to 24.

28. A computer-readable storage medium, wherein the computer-readable storage medium stores a computer program, the computer program comprises program instructions, and when the program instructions are executed by a processor, the processor is enabled to perform the method according to any one of claims 1 to 12 or the method according to any one of claims 13 to 24.

29. A chip, comprising a processor, configured to invoke a computer program from a memory and run the computer program, so that a communication device in which the chip is installed performs the method according to any one of claims 1 to 12 or the method according to any one of claims 13 to 24.
